(19) **Europäisches Patentamt / European Patent Office / Office européen des brevets**

(11) **EP 4 614 878 A1**

(12) **EUROPEAN PATENT APPLICATION**
published in accordance with Art. 153(4) EPC

(43) Date of publication:
**10.09.2025 Bulletin 2025/37**

(21) Application number: **23923760.5**

(22) Date of filing: **14.11.2023**

(51) International Patent Classification (IPC):
***H04L 9/40*** (2022.01)

(52) Cooperative Patent Classification (CPC):
**H04L 45/566; H04L 9/08; H04L 9/0825;
H04L 9/0838; H04L 9/40; H04L 63/0407;
H04L 63/0428**

(86) International application number:
**PCT/CN2023/131400**

(87) International publication number:
**WO 2024/174596 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.02.2023 CN 202310201907**

(71) Applicant: **Tencent Technology (Shenzhen)
Company Limited
Shenzhen, Guangdong, 518057 (CN)**

(72) Inventor: **WU, Bo
Shenzhen, Guangdong 518057 (CN)**

(74) Representative: **EP&C
P.O. Box 3241
2280 GE Rijswijk (NL)**

(54) **DATA ENCRYPTION METHOD AND RELATED APPARATUS**

(57) Embodiments of the present application disclose a data encryption method and a related apparatus. When a terminal device and a server perform network communication by means of an interaction packet, source addresses in a message request packet and a traffic packet for interaction between the terminal device and the server are encrypted by means of public keys of receiving ends, and real source addresses of the packets can be obtained only after decryption using private keys of the receiving ends. By encrypting the source addresses of the packets, even if an attacker acquires a packet, the attacker can only learn about a receiving end of a packet and cannot determine a sending end of the packet, so that the attacker can only obtain fragmented information and cannot concatenate the fragmented information, thereby reducing the possibility of leaking user privacy by means of the source address and destination address of the packet. Moreover, a terminal device acting as a data receiving end can also restore the real source address of the received packet using a private key of the terminal device, ensuring the security of the packet.

FIG. 4

**Description**

RELATED APPLICATION

This application claims priority to Chinese Patent Application No. 2023102019073, entitled "DATA ENCRYPTION METHOD AND RELATED APPARATUS" filed with the China National Intellectual Property Administration on February 23, 2023.

FIELD OF THE TECHNOLOGY

This application relates to the communication field, and in particular, to a data encryption technology.

BACKGROUND OF THE DISCLOSURE

A mode of network communication is routing and forwarding based on a destination address, and a main operation principle thereof is as follows: After receiving a packet from a transmit end or another intermediate routing node, an intermediate routing node extracts corresponding forwarding information, for example, a corresponding egress port, from a header of the packet. The intermediate routing node forwards the packet to a next-hop routing node (for example, an intermediate routing node or a destination) through the port, until the destination receives the packet.

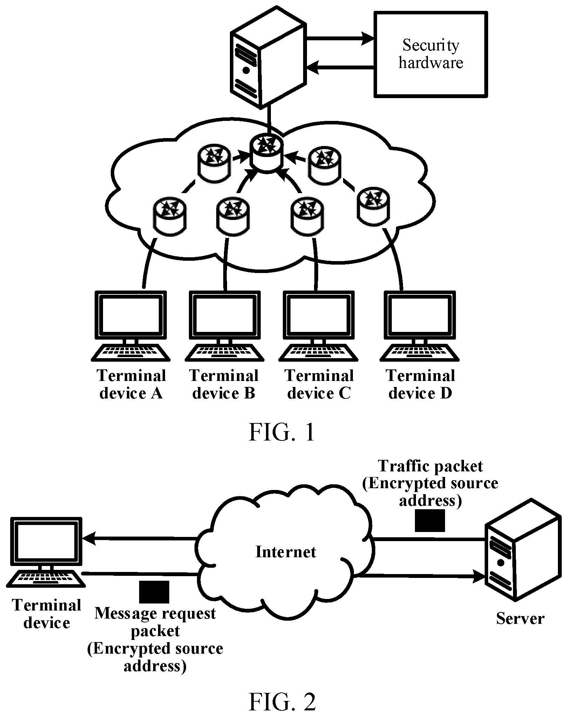

Security of network communication is an important condition for measuring an Internet service, client experience, and an operator. Security of network communication is mainly embodied in communication security, privacy protection, and other aspects. In the related technology, to improve security of network communication, security detection is performed on a received packet mainly by using various types of security detection software and hardware, to reduce risks of data tampering, traffic hijacking, and unauthorized acquisition of communication at a specific probability. As shown in FIG. 1, when a terminal device requests data from a data storage server, the server may perform security detection on a request packet or a message acknowledgement packet from the terminal device by using a security hardware platform, and filter out a detected malicious packet, to further improve security of network communication.

However, detection dimensions for security of network communication in the related technology are incomplete, and it is difficult to adapt to a current privacy protection requirement.

SUMMARY

To resolve the foregoing technical problem, this application provides a data encryption method and a related apparatus, to reduce a possibility of leakage of user privacy based on a source address and a destination address of a packet, and meet a current privacy protection requirement.

Embodiments of this application disclose the following technical solutions:

According to an aspect, embodiments of this application provide a data encryption method, executable by a terminal device and including:

transmitting a message request packet to a server, a first source address of the message request packet including an encrypted terminal address, and the encrypted terminal address being obtained by encrypting a terminal address of the terminal device by using a public key of the server; and

receiving a traffic packet returned by the server for the message request packet, a second source address of the traffic packet including an encrypted server address, and the encrypted server address being obtained by encrypting a server address of the server by using a public key of the terminal device, for obtaining traffic data from the traffic packet.

According to another aspect, embodiments of this application provide a data encryption method, executable by a server and including:

decrypting, by using a private key of the server, an encrypted terminal address in a message request packet received from a terminal device, to obtain a terminal address of the terminal device, the encrypted terminal address being obtained by encrypting the terminal address of the terminal device by using a public key of the server; and

transmitting, to the terminal device based on the terminal address, a traffic packet returned for the message request packet, a second source address of the traffic packet including an encrypted server address, and the encrypted server address being obtained by encrypting a server address of the server by using a public key of the terminal device.

According to another aspect, embodiments of this application provide a data encryption apparatus, including a transmitting unit, and an obtaining unit,

the transmitting unit being configured to transmit a message request packet to a server, a first source address of the message request packet including an encrypted terminal address, and the encrypted terminal address being obtained by encrypting a terminal address of the terminal device by using a public key of the server; and

the obtaining unit being configured to receive a traffic packet returned by the server for the message request packet, a second source address of the traffic packet including an encrypted server address, and the encrypted server address being obtained by encrypting a server address of the server by using a public key of the terminal device, for obtaining traffic data from the traffic packet.

According to another aspect, embodiments of this application provide a data encryption apparatus, including a decryption unit, and a transmitting unit,

the decryption unit being configured to decrypt, by using a private key of the server, an encrypted terminal address in a message request packet received from a terminal device, to obtain a terminal address of the terminal device, the encrypted terminal address being obtained by encrypting the terminal address of the terminal device by using a public key of the server; and

the transmitting unit being configured to transmit, to the terminal device based on the terminal address, a traffic packet returned for the message request packet, a second source address of the traffic packet including an encrypted server address, and the encrypted server address being obtained by encrypting a server address of the server by using a public key of the terminal device.

According to another aspect, embodiments of this application provide a data encryption system, the data encryption system including a terminal device and a server, the terminal device being configured to perform the method according to the foregoing aspects, and the server being configured to perform the method according to the foregoing aspects.

According to still another aspect, embodiments of this application provide a computer device, the computer device including a processor and a memory,

the memory being configured to store a computer program and transmit the computer program to the processor; and

the processor being configured to perform the method according to the foregoing aspects based on instructions in the computer program.

According to still another aspect, embodiments of this application provide a computer-readable storage medium, the computer-readable storage medium being configured to store a computer program, and the computer program being configured to perform the method according to the foregoing aspects.

According to still another aspect, embodiments of this application provide a computer program product including a computer program, when the computer program product is run on a computer device, the computer device being enabled to perform the method according to the foregoing aspects.

It can be learned from the foregoing technical solutions that, when a terminal device and a server perform network communication by exchanging packets, source addresses in a message request packet and a traffic packet that are exchanged between the terminal device and the server are both encrypted by using a public key of a receive end, and a real source address of a packet can be obtained only through decryption by using a private key of the receive end. A reason why a source address is hidden is as follows: In network communication, a packet usually carries a source address and a destination address to implement correct forwarding. However, when an attacker intercepts the packet, the attacker can obtain a relationship between the source address and the destination address, and can correspondingly determine time at which a user of a terminal device goes online and a content service obtained by the user, to deduce privacy information of the user. Therefore, a source address of a packet is encrypted, so that even if an attacker obtains the packet, the attacker can only learn of a receive end of the packet but cannot determine a transmit end of the packet. In this way, the attacker can only obtain fragmented information but cannot splice the fragmented information, so that a possibility of leakage of user privacy based on the source address and a destination address of the packet is reduced. In addition, a terminal device serving as a data receive end can restore a real source address of a received packet by using a private key of the terminal device, so that security of packet receiving is ensured.

BRIEF DESCRIPTION OF THE DRAWINGS

FIG. 1 is a schematic diagram of security hardening based on assistance of security hardware.

FIG. 2 is a schematic diagram of a data encryption scenario according to an embodiment of this application.

FIG. 3 is a schematic diagram of obtaining, by an attacker, user privacy based on a source address and a destination address.

FIG. 4 is a method flowchart of a data encryption method according to an embodiment of this application.

FIG. 5 is a schematic diagram of a message request packet according to an embodiment of this application.

FIG. 6 is a schematic diagram of a traffic packet according to an embodiment of this application.

FIG. 7 is a schematic diagram of a traffic acknowledgement packet according to an embodiment of this application.

FIG. 8 is a schematic diagram of a key creation packet according to an embodiment of this application.

FIG. 9 is a schematic diagram of adding, by an intermediate routing node, an intermediate shared key to a key creation packet according to an embodiment of this application.

FIG. 10 is a schematic diagram of a key acknowledgement packet according to an embodiment of this application.

FIG. 11 is a schematic diagram of a traffic packet in which a source address and a destination address are encrypted according to an embodiment of this application.

FIG. 12 is a specific flowchart of a data encryption method according to an embodiment of this application.

FIG. 13 is a schematic diagram of communication in a data encryption method according to an embodiment of this application.

FIG. 14 is a structural diagram of a data encryption apparatus according to an embodiment of this application.

FIG. 15 is a structural diagram of another data encryption apparatus according to an embodiment of this application.

FIG. 16 is a structural diagram of a data encryption system according to an embodiment of this application.

FIG. 17 is a structural diagram of a terminal device according to an embodiment of this application.

FIG. 18 is a structural diagram of a server according to an embodiment of this application.

DESCRIPTION OF EMBODIMENTS

The following describes the embodiments of this application with reference to the accompanying drawings.
In the related technology, security detection may be performed on network communication by using various types of security detection software and hardware. As shown in FIG. 1, security detection may be performed, by using security detection hardware, on various packets exchanged between a terminal device and a data storage server, and a detected malicious packet is filtered out, so that security of network communication is improved to some extent. In addition, security of network communication may be further improved from a perspective of a communication protocol. Data in a packet is mainly encrypted to reduce risks of unauthorized acquisition, tampering, and redirection of the data during packet forwarding. For example, the Secure Sockets Layer (SSL)/Transport Layer Security (TLS) protocol is used for encryption based on the Transmission Control Protocol (TCP), or the Quick UDP Internet Connection (QUIC) protocol is proposed based on the User Datagram Protocol (UDP), to encrypt data in a packet. In this way, a malicious intermediate routing node cannot obtain data content in the packet when a decryption key is absent.
However, performing security detection on network communication by using security detection software or hardware and encrypting data from a perspective of a communication protocol cannot improve security from a dimension of a packet address. When an attacker intercepts a packet, the attacker can obtain a source address and a destination address of the packet, and can further deduce privacy information of a terminal user based on a relationship between the source address and the destination address, leading to leakage of user privacy.

In view of this, the embodiments of this application provide a data encryption method and a related apparatus, to encrypt a source address in a packet exchanged between a terminal device and a server, and reduce a possibility that an attacker obtains privacy information of a terminal user based on the source address and a destination address of the packet. This improves security of network communication from a dimension of a packet address.

The data encryption method provided in the embodiments of this application may be implemented by a computer device. The computer device may be a terminal device or a server. The server may be an independent physical server, a server cluster or a distributed system including a plurality of physical servers, or a cloud server that provides a cloud computing service. The terminal device may be a smartphone, a tablet computer, a notebook computer, a desktop computer, a smart speaker, a smartwatch, an in-vehicle terminal, a smart television, or the like, but is not limited thereto. The terminal device and the server may be directly or indirectly connected through wired or wireless communication. This is not limited in this application.

The data encryption method provided in the embodiments of this application may be implemented based on cloud storage. The cloud storage is a new concept extended and developed from the concept of cloud computing. A distributed cloud storage system (referred to as a storage system below) is a storage system that integrates a large number of different types of storage devices (also referred to as storage nodes) in a network through application software or application interfaces based on cluster applications, grid technologies, distributed file storage systems, and other functions to enable the storage devices to operate together to provide data storage and service access functions for the outside.

Currently, a storage method for the storage system is as follows: A logical volume is created. During creation of the logical volume, physical storage space is allocated to each logical volume. The physical storage space may include magnetic disks of one or more storage devices. A client storing data in a logical volume is equivalent to storing data in a file system. The file system divides data into many parts, and each part is an object. The object not only includes data but also includes additional information such as a data identity (ID). The file system writes each object into physical storage space of the logical volume, and the file system records storage location information of each object. When a client requests to access data, the file system can enable the client to access the data based on the storage location information of each object.

A specific process of allocating, by the storage system, physical storage space to a logical volume is as follows: Physical storage space is pre-divided into stripes based on an estimate for a capacity of an object to be stored in a logical volume (the estimate usually has a large margin compared with a capacity of an object that actually needs to be stored) and a Redundant Array of Independent Disk (RAID) group. A logical volume may be understood as a stripe. In this way, the physical storage space is allocated to logical volumes.

For example, in the embodiments of this application, the server may be a cloud server for implementing cloud storage.

FIG. 2 is a schematic diagram of a data encryption scenario according to an embodiment of this application. The foregoing computer device includes a terminal device and a server. The terminal device and the server may perform network communication by exchanging packets. The server may be a cloud server that can implement cloud storage, or may be a non-cloud server, for example, a conventional physical server. The server may be a content server. The content server is a server that can implement a function of a content delivery network (CDN).

During network communication between the terminal device and the server, the terminal device transmits a message request packet. The message request packet is a request packet transmitted by the terminal device to the server. For example, the message request packet may be a request packet transmitted by the terminal device to the server to request to obtain target content. A source address of the message request packet is not directly disclosed. As shown in FIG. 2, the source address of the message request packet is encrypted by using a public key of a receive end (the server). The server can obtain a real source address of the message request packet only through decryption by using a private key of the server after receiving the message request packet.

Correspondingly, the terminal device obtains a traffic packet from the server. The traffic packet is a packet transmitted by the server to the terminal device in response to the message request packet. For example, the traffic packet may be a packet transmitted by the server to enable the terminal device to obtain the target content. A source address of the traffic packet is not directly disclosed either. As shown in FIG. 2, the source address of the traffic packet is also encrypted by using a public key of a receive end (the terminal device). The terminal device can obtain a real source address of the traffic packet only through decryption by using a private key of the terminal device after obtaining the traffic packet.

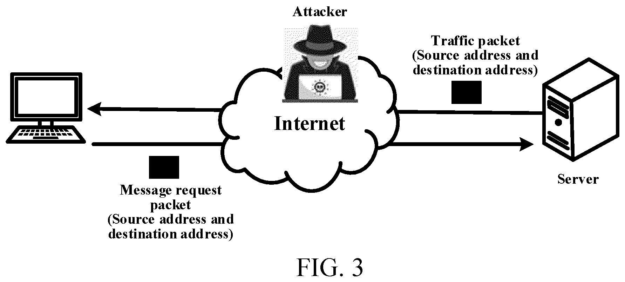

During network communication between the terminal device and the server, a reason why the source addresses in the exchanged message request packet and traffic packet are hidden is as follows: To implement correct forwarding of a packet during network communication, a packet usually carries a source address and a destination address. However, when an attacker intercepts the packet, the attacker can obtain a relationship between the source address and the destination address, and can further deduce, based on the relationship between the source address and the destination address, privacy information such as time at which a user of the terminal device goes online and a content service obtained by the user. As shown in FIG. 3, an attacker located between a terminal device and a server may learn of, based on source addresses and destination addresses of a message request packet and a traffic packet, information that "a user is surfing the Internet", and may even deduce "whether the user is at home". In addition, if the attacker obtains an address set of servers of a cloud service provider, the attacker may determine, based on whether an address in the address set exists in the message request packet or the traffic packet, a content service that the user is obtaining. For example, Internet Protocol (IP) addresses used by a cloud service provider to provide services for a short video platform are IP1, IP2, IP3, ..., and IP100. If a source address or a destination address in a packet intercepted by the attacker includes the foregoing IP address, the following user state can be deduced: "The user is watching a short video".

In the embodiments of this application, a source address of a packet is encrypted, so that even if an attacker intercepts the packet, the attacker can only learn of a receive end of the packet but cannot determine a transmit end of the packet. In this way, the attacker can only obtain fragmented information but cannot splice the fragmented information, so that a possibility of leakage of user privacy based on the source address and a destination address of the packet is reduced.

In addition, a terminal device serving as a receive end of a traffic packet can restore a real source address of the received traffic packet by using a private key of the terminal device, so that a risk caused by randomly receiving a packet by the terminal device is reduced, and security of packet receiving is ensured.

It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

In some embodiments of this application, a data encryption method is provided. The method is executable by the terminal device, and includes: transmitting a message request packet to a server, a first source address of the message request packet comprising an encrypted terminal address, and the encrypted terminal address being obtained by encrypting a terminal address of the terminal device by using a public key of the server; and receiving a traffic packet returned by the server for the message request packet, a second source address of the traffic packet comprising an encrypted server address, and the encrypted server address being obtained by encrypting a server address of the server by using a public key of the terminal device, for obtaining traffic data from the traffic packet. In some embodiments, the encrypted server address may be decrypted using a private key of the terminal device to obtain a to-be-determined address, and the traffic data may be obtained from the traffic packet in response to the to-be-determined server address being consistent with the server address.

In some embodiments of this application, a data encryption method is provided. The method is executable by the server, and includes: decrypting, by using a private key of the server, an encrypted terminal address in a message request packet received from a terminal device, to obtain a terminal address of the terminal device, the encrypted terminal address being obtained by encrypting the terminal address of the terminal device by using a public key of the server; and transmitting, to the terminal device based on the terminal address, a traffic packet returned for the message request packet, a second source address of the traffic packet comprising an encrypted server address, and the encrypted server address being obtained by encrypting a server address of the server by using a public key of the terminal device. In some embodiments, a first source address of the message request packet may include an encrypted terminal address, and the encrypted terminal address may be obtained by encrypting a terminal address of the terminal device by using a public key of the server.

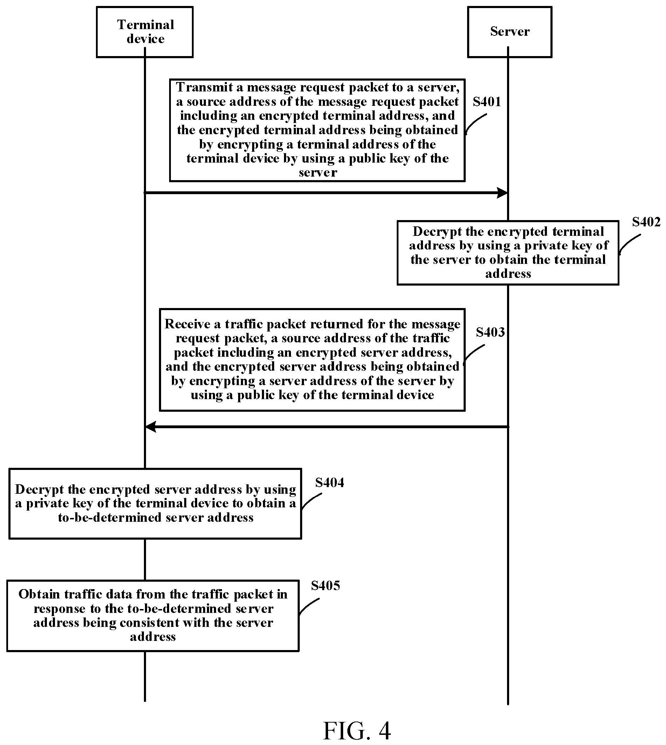

FIG. 4 is a method flowchart of a data encryption method according to some further embodiments of this application. In some embodiments, an example in which the computer device includes a terminal device and a server is used for description. It is noted that the embodiments described with reference to the drawings in this application are merely exemplary, and it is not limited in this application that the respective method must include all the steps as described and illustrated; rather, the data encryption method in the application may include some or all of the steps as listed, and the steps may be combined with each other arbitrarily to form various embodiments of the application.

In some embodiments, the method may include S401, in which the terminal device transmits a message request packet to the server, a source address of the message request packet including an encrypted terminal address, and the encrypted terminal address being obtained by encrypting a terminal address of the terminal device by using a public key of the server.

The terminal device and the server may perform network communication by exchanging packets. During actual application, one server may transmit packets to a plurality of terminal devices, and one terminal may also transmit request packets to a plurality of servers. In some embodiments, network communication between one terminal device and one server is used as an example for description.

An objective of network communication between the terminal device and the server may be to enable the terminal device to obtain target content from the server. When the terminal device obtains the target content from the server through packet exchange, the terminal device is a data request end, and the server is a data transmit end. The target content is data content needed by the terminal device. The target content may be data content in various forms, for example, text, a picture, a video, or livestreaming. Because different servers may provide different data content, the terminal device may first determine a corresponding server based on the target content before transmitting a message request packet, and then transmit a corresponding message request packet to the determined server.

The message request packet is a request packet transmitted by the terminal device to the server. In some embodiments, the source address in the message request packet is encrypted, in other words, the source address in the message request packet is hidden, to prevent an attacker from obtaining a relationship between the source address and a destination address in the message request packet after intercepting the packet and further obtaining privacy information of a user. In this way, even if the attacker intercepts the packet, the attacker can only learn of the destination address of the packet but cannot determine the source address of the packet. To be specific, after intercepting the packet, the attacker only knows that a device has transmitted the packet to the server but does not know which device has transmitted the packet, and it is difficult for the attacker to deduce privacy information of the user. In other words, the source address in the message request packet can be hidden through encryption of the source address of the message request packet. This reduces a possibility that the attacker deduces privacy information of the user based on the source address and the destination address of the message request packet.

The terminal address of the terminal device may be encrypted by using the public key of the server to obtain the corresponding encrypted terminal address. For example, the encrypted terminal address may be obtained by using the following formula:

$$IP\_sec = Enc\{Key\_pub\_server, IP\_i\},$$

where
IP_sec represents the encrypted terminal address, Key_pub_server represents the public key of the server, IP_i represents the terminal address of the terminal device, and $Enc\{\alpha, \beta\}$ indicates to perform an encryption operation on data $\beta$ by using a key $\alpha$.

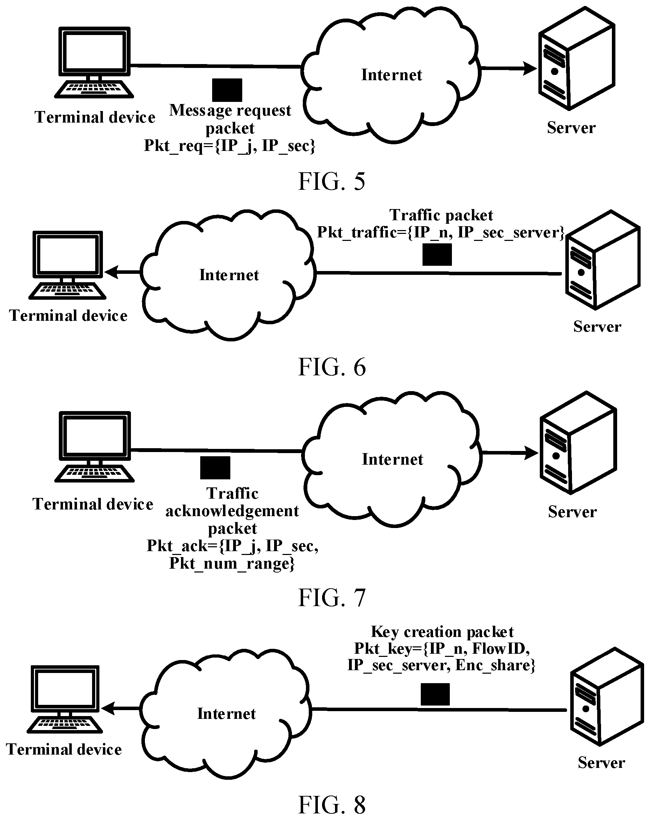

Based on the foregoing formula, the real terminal address may be encrypted by using the public key of the server to obtain the corresponding encrypted terminal address. As shown in FIG. 5, the encrypted terminal address may be carried in the message request packet (Pkt_req), for example, may be carried in a payload of the message request packet. In this way, after obtaining the message request packet, the server can determine, based on the encrypted terminal address, the terminal address corresponding to the terminal device, in other words, a receive end of the message request packet can accurately determine a transmit end of the message request packet. Therefore, in a subsequent operation, the receive end can accurately generate a traffic packet whose destination address is the transmit end, to ensure security and accuracy of packet propagation.

To ensure accurate forwarding of the message request packet, in some embodiments, the destination address of the message request packet is not encrypted, in other words, the message request packet includes a plaintext server address of the server, so that the message request packet can be accurately forwarded to the server based on the server address during network communication.

To further confuse the attacker after the attacker intercepts the message request packet and further reduce a possibility that the attacker deduces privacy information of the user based on the real source address and destination address in the message request packet, in a possible implementation, the source address of the message request packet further includes a hidden terminal address, and the hidden terminal address is different from the terminal address.

The hidden terminal address may include a virtual source address of a plaintext in a message request packet. To hide the real source address of the message request packet, the hidden terminal address is clearly different from the real terminal address of the terminal device that transmits the message request packet. As shown in FIG. 5, when the terminal address of the terminal device is IP_i, the message request packet not only includes the encrypted terminal address IP_sec, but also includes the hidden terminal address IP_j. For example, a header of the message request packet may carry the hidden terminal address. IP_i is different from IP_j.

The hidden terminal address is added to the message request packet, so that the attacker is confused by the hidden terminal address in the message request packet after intercepting the message request packet, and the attacker is made to incorrectly determine that the source address of the message request packet is the hidden terminal address. This further reduces a possibility that the attacker obtains the real source address and destination address based on the message request packet and deduces privacy information of the user based on the real source address and destination address.

In addition, because the real source address of the message request packet is hidden, a packet format of the message request packet changes. However, the hidden terminal address is added to the source address of the message request packet, so that a format of the message request packet in which the source address is encrypted is the same as a format of a packet in which a source address is not encrypted. In this way, during network communication between the terminal device and the server, a forwarding device can successfully interpret a meaning of the message request packet based on the format of the message request packet, to ensure successful forwarding of the message request packet.

In some embodiments, the method may further include S402 in which the server decrypts the encrypted terminal address by using a private key of the server to obtain the terminal address.

After receiving the message request packet transmitted by the terminal device, the server needs to determine the source address of the message request packet, to accurately respond to the message request packet. Because the source address in the message request packet is hidden, the server cannot directly obtain the source address of the message request packet, and needs to decrypt the encrypted terminal address in the message request packet to obtain the corresponding terminal address.

As described in S401, the encrypted terminal address is obtained by encrypting the terminal address of the terminal device by using the public key of the server. The public key of the server is a public key corresponding to the server, and other devices may encrypt data by using the public key of the server. However, the private key of the server is a key private to the server, and only the server owns the key. To be specific, only the server can decrypt, by using the private key of the server, data encrypted by using the public key of the server. Therefore, the server may decrypt the encrypted terminal address by using the private key of the server to obtain the terminal address. For example, the terminal address may be obtained by using the following formula:

$$IP\_i = Dec\{Key\_pri\_server, IP\_sec\},$$

where
IP_i represents the terminal address of the terminal device, Key_pri_server represents the private key of the server, IP_sec represents the encrypted terminal address, and $Dec\{\alpha, \beta\}$ indicates to perform a decryption operation on data $\beta$ by using a key $\alpha$.

Based on the foregoing formula, the encrypted terminal address may be decrypted by using the private key of the server to obtain the terminal address. The terminal address is the real source address of the message request packet. In other words, after obtaining the message request packet, the server determines the real source address of the message request packet by decrypting the encrypted terminal address in the message request packet. This provides a basis for the server to accurately transmit a traffic packet to the terminal address in a subsequent operation.

In some embodiments, the method may further include S403 in which the terminal device receives a traffic packet returned by the server for the message request packet, a source address of the traffic packet including an encrypted server address, and the encrypted server address being obtained by encrypting a server address of the server by using a public key of the terminal device.

The traffic packet is a packet transmitted by the server to the terminal device in response to a request in the message request packet. For example, when the message request packet is a packet used by the terminal device to request to obtain target content from the server, the traffic packet may be a packet transmitted by the server to enable the terminal device to obtain the target content. If the target content is text needed by the terminal device, the traffic packet correspondingly includes data corresponding to the text. When the target content is text and a picture that are needed by the terminal device, the traffic packet correspondingly includes data corresponding to the text and the picture.

In some embodiments, the source address in the traffic packet is also encrypted, to prevent an attacker from obtaining a relationship between the source address and a destination address in the traffic packet after intercepting the packet and further obtaining privacy information of the user. In this way, even if the attacker intercepts the packet, the attacker can only learn of the destination address of the packet but cannot determine the source address of the packet. To be specific, after intercepting the packet, the attacker only knows that a device has transmitted the packet to the terminal device but does not know which device has transmitted the packet, and correspondingly, it is difficult for the attacker to deduce privacy information of the user. In other words, the source address in the traffic packet is hidden through encryption of the source address of the traffic packet. This reduces a possibility that the attacker deduces privacy information of the user based on the source address and the destination address of the traffic packet.

The server address of the server may be encrypted by using the public key of the terminal device to obtain the corresponding encrypted server address. For example, the encrypted server address may be obtained by using the following formula:

$$IP\_sec\_server = Enc\{Key\_pub\_client, IP\_m\},$$

where
IP_sec_server represents the encrypted server address, Key_pub_client represents the public key of the terminal device, IP_m represents the server address, and Enc{α, β} indicates to perform an encryption operation on data β by using a key α.

Based on the foregoing formula, the real server address may be encrypted by using the public key of the terminal device to obtain the corresponding encrypted server address. As shown in FIG. 6, the encrypted server address may be carried in the traffic packet (Pkt_traffic). In this way, after obtaining the traffic packet, the terminal device can still determine the source address of the traffic packet through a subsequent operation if the source address of the traffic packet is hidden. This provides a basis for ensuring security of packet propagation.

To ensure accurate forwarding of the traffic packet, in some embodiments, the destination address of the traffic packet is not encrypted, in other words, the traffic packet includes a plaintext terminal address of the terminal device, so that the traffic packet can be accurately forwarded, based on the terminal address during network communication, to the terminal device that transmits the message request packet.

In a possible implementation, the source address of the traffic packet further includes a hidden server address, and the hidden server address is different from the server address.

The hidden server address is a plaintext virtual source address in the traffic packet. The hidden server address is different from the real server address of the server that transmits the traffic packet. As shown in FIG. 6, when the server address is IP_m, the traffic packet not only includes the encrypted server address IP_sec_server, but also includes the hidden server address IP_n, where IP_n is different from IP_m.

The hidden server address is added to the traffic packet. On the one hand, the attacker is confused by the hidden server address in the traffic packet after intercepting the traffic packet. This further reduces a possibility that the attacker obtains the real source address and destination address of the traffic packet and deduces privacy information of the user based on the real source address and destination address. On the other hand, a packet format of the traffic packet can be ensured, to ensure successful forwarding of the traffic packet.

In some embodiments, the method may further include S404 in which the terminal device decrypts the encrypted server address by using a private key of the terminal device to obtain a to-be-determined server address.

To ensure security of packet transmission, the terminal device needs to determine a source of an obtained packet, to reduce a possibility that the terminal device is attacked by a malicious packet. Therefore, after obtaining the traffic packet from the server, the terminal device needs to determine the source address of the traffic packet, to determine a source of the traffic packet. Because the source address of the traffic packet is hidden, the terminal device cannot directly obtain the source address of the traffic packet, and needs to decrypt the encrypted server address in the traffic packet to obtain the corresponding to-be-determined server address.

As described in S403, the encrypted server address is obtained through encryption by using the public key of the terminal device. Therefore, the terminal device may decrypt the encrypted server address by using the private key of the terminal device to obtain the to-be-determined server address. For example, the to-be-determined server address may be obtained by using the following formula:

$$IP\_m_1 = Dec\{Key\_pri\_client, IP\_sec\_server\},$$

where
IP_m$_1$ represents the to-be-determined server address, Key_pri_client represents the private key of the terminal device, IP_sec_server represents the encrypted server address, and Dec{α, β} indicates to perform a decryption operation on data β by using a key α.

Based on the foregoing formula, the encrypted server address may be decrypted by using the private key of the terminal device to obtain the to-be-determined server address. The to-be-determined server address is the real source address of the traffic packet. In other words, after obtaining the traffic packet in which the source address is hidden, the terminal device determines the real source address of the traffic packet by decrypting the encrypted server address in the traffic packet.

The traffic packet may be intercepted without authorization and tampered with during transmission. Correspondingly, the encrypted server address included in the traffic packet may also be tampered with. In this case, a server address obtained by the terminal device by decrypting the encrypted server address may not be the real server address, in other words, not a real address of the server that is encrypted. Certainly, if the traffic packet is normally transmitted, the server address obtained by the terminal device by decrypting the encrypted server address in the traffic packet is the real server address. Because authenticity of the server address obtained by the terminal device by decrypting the encrypted server address cannot be determined currently, the server address is referred to as the to-be-determined server address.

In some embodiments, the method may further include S405 in which the terminal device obtains traffic data from the traffic packet in response to the to-be-determined server address being consistent with the server address.

After obtaining the traffic packet, the terminal device determines in S404 that the real source address of the traffic packet is the to-be-determined server address and the destination address of the message request packet transmitted by the terminal device is the server address of the server. When the server address is consistent with the to-be-determined server address, the destination address of the message request packet transmitted by the terminal device is consistent with the real source address of the traffic packet obtained by the terminal device. This indicates that the traffic packet is a packet returned for the message request packet and needed by the terminal device, but not a malicious packet or an irrelevant packet transmitted by another server. The terminal device may receive traffic data in the traffic packet, so that the terminal device can obtain data content in the traffic packet.

During network communication, a receive end of data may not completely obtain packet content transmitted by a transmit end of the data. Therefore, during interaction between the terminal device and the server, whether the terminal device has successfully obtained packet content transmitted by the server needs to be determined.

In a possible implementation, the terminal device may further determine a packet receiving result for the traffic packet, and transmit a traffic acknowledgement packet including the packet receiving result to the server, a source address of the traffic acknowledgement packet including the encrypted terminal address.

The packet receiving result is configured for indicating a receiving status of the terminal device for the traffic packet after the terminal device receives the traffic data in the traffic packet. In other words, the packet receiving result is configured for indicating whether the terminal device has actually successfully received the traffic packet.

During actual network communication between the terminal device and the server, for a message request packet transmitted by the terminal device, the server usually needs to transmit a plurality of traffic packets to respond to a request in the message request packet. For example, when the message request packet is configured for requesting to obtain video content from the server, the server usually needs to transmit a plurality of traffic packets to completely transmit the video content. In this case, a packet receiving result may be a receiving status of the terminal device for the plurality of traffic packets that is obtained through analysis after the terminal device receives the plurality of traffic packets. For example, the packet receiving result of the terminal device for the plurality of traffic packets may be indicated by a range of numbers of packets actually received (or not received) by the terminal device. To enable the server to obtain the receiving status of the terminal device for the plurality of traffic packets performed in a timely manner, the terminal device may periodically determine a packet receiving result, generate a corresponding traffic acknowledgement packet each time after a packet receiving result is determined, and report the traffic acknowledgement packet to the server.

To enable the server to determine whether the terminal device has successfully obtained data content transmitted by the server, the terminal device may transmit the traffic acknowledgement packet including the packet receiving result to the server. The traffic acknowledgement packet is a packet used by the terminal device to feed back the packet receiving status to the server after the terminal device receives the traffic data in the traffic packet.

The source address in the traffic acknowledgement packet is also hidden, to be specific, the source address in the traffic acknowledgement packet is not the terminal address but the encrypted terminal address, to prevent an attacker from obtaining a relationship between the source address and a destination address in the traffic acknowledgement packet after intercepting the packet and further obtaining privacy information of the user. This reduces a possibility that the attacker deduces privacy information of the user based on the source address and the destination address of the traffic acknowledgement packet.

When the source address of the traffic acknowledgement packet is hidden, the source address of the traffic acknowledgement packet may further include the hidden terminal address, to further confuse the attacker and retain a packet format.

As shown in FIG. 7, the traffic acknowledgement packet (Pkt_ack) transmitted by the terminal device to the server may include the hidden terminal address IP_j, the encrypted terminal address IP_sec, and a range of numbers of currently received packetsPkt_num_range. The hidden terminal address is configured for confusing the attacker and retaining a packet format of the traffic acknowledgement packet. The encrypted terminal address is configured for providing the server with an encrypted real source address that can be decrypted only by the server. The range of numbers of currently received packets is configured for indicating the packet receiving result of the terminal device.

To ensure accurate forwarding of the traffic acknowledgement packet, in some embodiments, the destination address of the traffic acknowledgement packet is not encrypted, in other words, the traffic acknowledgement packet includes a plaintext server address of the server.

After obtaining the traffic data in the traffic packet, the terminal device may transmit the traffic acknowledgement packet including the packet receiving result to the server, so that the server can determine the receiving status of the terminal device for the traffic packet, and verify whether the traffic packet is successfully transmitted, to ensure integrity of data transmission.

In a possible implementation, the server receives the traffic acknowledgement packet that is transmitted by the terminal device and that includes the packet receiving result, the source address of the traffic acknowledgement packet including the encrypted terminal address, and the packet receiving result being configured for identifying the receiving status of the terminal device for the traffic packet.

The server transmits a target traffic packet as a traffic retransmission packet to the terminal device when the server determines, based on the packet receiving result, that the terminal device has not received the target traffic packet, a source address of the traffic retransmission packet including the encrypted server address.

After the terminal device transmits the traffic acknowledgement packet to the server, the server may receive the traffic acknowledgement packet transmitted by the terminal device, the traffic acknowledgement packet including the packet receiving result. The server may determine the receiving status of the terminal device for the target traffic packet based on the packet receiving result.

When the server determines, based on the packet receiving result, that the terminal device has received the target traffic packet, the server may determine that the target traffic packet is successfully transmitted, and no longer needs to retransmit the target traffic packet.

When the server determines, based on the packet receiving result, that the terminal device has not received the target traffic packet, the server may transmit the target traffic packet as a traffic retransmission packet to the terminal device. The traffic retransmission packet is a traffic packet that is identified by the packet receiving result and that is not received by the terminal device. The traffic retransmission packet is configured for retransmitting a traffic packet that is not received by the terminal device. In other words, if a traffic packet is not received by the terminal device, the server may retransmit the traffic packet that is not received as a traffic retransmission packet, so that the terminal device can obtain the traffic packet that is not received. The server transmits the traffic retransmission packet, so that the terminal device can obtain the target traffic packet that is not received, to ensure reliability of packet transmission between the terminal device and the server.

The source address in the traffic retransmission packet is also hidden, to be specific, the source address in the traffic retransmission packet is not the server address but the encrypted server address, to prevent an attacker from obtaining a relationship between the source address and a destination address in the traffic retransmission packet after intercepting the packet. This reduces a possibility that the attacker deduces privacy information of the user based on the source address and the destination address of the traffic retransmission packet.

When the source address of the traffic retransmission packet is hidden, the source address of the traffic retransmission packet may further include the hidden server address, to further confuse the attacker and retain a packet format.

To ensure accurate forwarding of the traffic retransmission packet, in some embodiments, the destination address of the traffic retransmission packet is not encrypted, in other words, the traffic retransmission packet includes a plaintext terminal address of the terminal device.

After receiving the traffic acknowledgement packet transmitted by the terminal device, the server may determine the receiving status of the terminal device for the traffic packet based on the traffic acknowledgement packet. If the terminal device has not received the target traffic packet, in other words, if the terminal device has not completely received the traffic packet returned by the server, the terminal device generates a packet receiving result indicating that the terminal device has not successfully received the target traffic packet returned for the message request packet, and adds the packet receiving result to the traffic acknowledgement packet. The server may transmit the traffic retransmission packet to the terminal device in response to the traffic acknowledgement packet, to implement retransmission upon packet loss, and reduce a possibility of loss of a packet to be received by the terminal device.

In a possible implementation, the terminal device receives the traffic retransmission packet returned by the server in response to the traffic acknowledgement packet, the traffic retransmission packet being a traffic packet that is identified by the packet receiving result and that is not received by the terminal device, and the source address of the traffic retransmission packet including the encrypted server address.

When the server determines, based on the traffic acknowledgement packet, that a traffic packet is not received by the terminal device, the terminal device may obtain, from the server, the traffic retransmission packet returned in response to the traffic acknowledgement packet. The traffic retransmission packet is a packet that is not received by the terminal device and that needs to be retransmitted. The terminal device may obtain the traffic retransmission packet to receive the traffic packet that is not received. The source address in the traffic retransmission packet is also hidden, to prevent an attacker from obtaining a relationship between the source address and a destination address in the traffic retransmission packet after intercepting the packet when the terminal device obtains the traffic retransmission packet. When the source address of the traffic retransmission packet is hidden, the source address of the traffic retransmission packet may further include the hidden server address, to further confuse the attacker and retain a packet format.

The terminal device obtains the traffic retransmission packet returned in response to the traffic acknowledgement packet, to receive again a traffic packet that is not received, so that reliability of packet transmission between the terminal device and the server is ensured.

When the terminal device and the server perform network communication by exchanging packets, source addresses in a message request packet and a traffic packet that are exchanged between the terminal device and the server are both encrypted by using a public key of a receive end, and a real source address of a packet can be obtained only through decryption by using a private key of the receive end. A reason why a source address is hidden is as follows: In network communication, a packet usually carries a source address and a destination address to implement correct forwarding. However, when an attacker intercepts the packet, the attacker obtains a relationship between the source address and the destination address, and further determines time at which a user of the terminal device goes online and a content service obtained by the user, to deduce privacy information of the user. Therefore, a source address of a packet is encrypted, so that even if an attacker obtains the packet, the attacker can only learn of a receive end of the packet but cannot determine a transmit end of the packet. In this way, the attacker can only obtain fragmented information but cannot splice the fragmented information, so that a possibility of leakage of user privacy based on the source address and a destination address of the packet is reduced. In addition, a terminal device serving as a data receive end can restore a real source address of a received packet by using a private key of the terminal device, so that security of packet receiving is ensured.

In the foregoing embodiments, a source address of a packet between the terminal device and the server is encrypted, to reduce a possibility of leakage of user privacy based on the source address and a destination address of the packet. In the related technology, forwarding during network communication is mainly performed based on a destination address. If a destination address of a packet is modified without authorization, the packet cannot be correctly forwarded, causing degradation of quality of experience (QoE) and quality of service (QoS). Therefore, the packet still includes a plaintext destination address, so that the packet can be accurately forwarded based on the destination address, to ensure reliable packet exchange between the terminal device and the server.

Although a source address of a packet between the terminal device and the server can be encrypted to reduce, to some extent, a possibility of leakage of user privacy based on the source address and a destination address of the packet, because the destination address in the packet is not encrypted, a risk of leakage of user privacy still exists. Therefore, destination addresses of traffic packets with the largest quantity during network communication between the terminal device and the server may also be encrypted. In this way, when an attacker obtains a traffic packet, the attacker can obtain neither a transmit end of the traffic packet nor a receive end of the traffic packet. This further reduces a possibility that the attacker deduces privacy information of a user based on a real source address and destination address.

In a possible implementation, the terminal device receives the traffic packet returned for the message request packet in S403, and correspondingly, the server may transmit, to the terminal device based on the terminal address, the traffic packet returned for the message request packet. In terms of transmitting, by the server to the terminal device based on the terminal address, the traffic packet returned for the message request packet, the data encryption method may include any one or more of the following operations:

> S11: The server determines a traffic link from the server to the terminal device based on the terminal address, the traffic link including N intermediate routing nodes, and N being an integer greater than or equal to 1.

> S12: The server transmits, to the terminal device through the N intermediate routing nodes in the traffic link, the traffic packet returned for the message request packet.

The traffic link is a link for transmitting a traffic packet between the server and the terminal device. During actual packet exchange between the server and the terminal device, the server usually transmits a plurality of traffic packets to the terminal device. Therefore, to obtain a stable link for reliably forwarding a traffic packet, the server may determine, based on the terminal address, a traffic link for transmitting a traffic packet from the server to the terminal device. The traffic link includes N intermediate routing nodes.

The intermediate routing node is a routing node that is included in the traffic link and that is configured to forward a traffic packet. In a process in which the server transmits a traffic packet to the terminal device based on the traffic link, the intermediate routing node is configured to forward the traffic packet until a previous-hop routing node of the terminal device successfully forwards the traffic packet to the terminal device.

To successfully send a traffic packet from the server to the terminal device, the server may first determine a traffic link from the server to the terminal device based on the terminal address, and then accurately forward the traffic packet from the server to the terminal device through N intermediate routing nodes in the traffic link.

Based on the description that the server may determine, based on the terminal address, the traffic link for forwarding a traffic packet, the server may first transmit a key creation packet to the terminal device based on the traffic link, to obtain related information of an intermediate routing node of the traffic link. To be specific, in a possible implementation, the data encryption method further includes the following operations:

> S21: The server generates a flow identifier and a shared key for the traffic link based on the terminal address and the server address.

> S22: The server encrypts the shared key by using the public key of the terminal device to obtain encrypted key data.

> S23: The server transmits, to the terminal device through the traffic link, a key creation packet including the encrypted key data and the flow identifier, a source address of the key creation packet including the encrypted server address, and the key creation packet being configured for indicating the N intermediate routing nodes to generate an intermediate shared key based on the flow identifier, encrypt the intermediate shared key by using the public key of the terminal device, and add an encryption result to the encrypted key data.

As described above, the traffic link is a link for transmitting a traffic packet between the server and the terminal device. Because a plurality of links may exist between the server and the terminal device, the traffic link may be accurately identified based on the flow identifier. In other words, the flow identifier is identification data for uniquely identifying the traffic link. For example, the flow identifier of the traffic link may be determined based on the following formula:

$$FlowID = Hash(IP\_m\|IP\_i\|Port\_server\|Port\_client\|Protocol),$$

where
FlowID represents the flow identifier, IP_m represents the server address of the server, IP_i represents the terminal address of the terminal device, Port_server represents a server port of the server, Port_client represents a terminal port of the terminal device, Protocol represents a communication protocol between the server and the terminal device, Hash() represents a hash operation, and $\|$ represents a splicing operation.

The flow identifier corresponding to the traffic link for transmitting a traffic packet between the server and the terminal device may be determined based on the foregoing formula.

The shared key for the traffic link is key information that is calculated by the server based on the flow identifier and that is shared with the terminal device. The shared key is transmitted by the server to the terminal device after being encrypted, and is configured for encrypting data transmitted by the terminal device to the server in a subsequent operation. In other words, although the shared key is generated by the server, the shared key is not private to the server, but is key information that can be shared with the terminal device. For example, the shared key for the traffic link may be calculated based on the following formula:

$$Key\_share = Hash(info\_server\|FlowID),$$

where
Key_share represents the shared key, info_server represents private information of the server, FlowID represents the flow identifier, Hash() represents a hash operation, and $\|$ represents a splicing operation.

Based on the foregoing formula, the server may calculate, based on the private information of the server and the flow identifier, the shared key shared with the terminal device]

After the server generates, based on the flow identifier, the shared key shared with the terminal device, to enable only the terminal device to obtain the shared key, the server may encrypt the shared key based on the public key of the terminal device to obtain the corresponding encrypted key data. For example, the encrypted key data corresponding to the shared key may be obtained by using the following formula:

$$Enc\_share = Enc\{Key\_pub\_client, Key\_share\},$$

where
Enc_share represents the encrypted key data, Key_pub_client represents the public key of the terminal device, Key_share represents the shared key, and $Enc\{\alpha, \beta\}$ indicates to perform an encryption operation on data $\beta$ by using a key $\alpha$.

Based on the foregoing formula, the server may encrypt the shared key by using the public key of the terminal device to obtain the encrypted key data that can be decrypted only by the terminal device.

After the server obtains the flow identifier and the encrypted key data for the traffic link, the server may transmit the flow identifier and the encrypted key data to the terminal device by using the key creation packet. The source address in the key creation packet is also hidden, to be specific, the source address in the key creation packet is not the server address but the encrypted server address, to prevent an attacker from obtaining a relationship between the source address and a destination address in the key creation packet after intercepting the packet during forwarding of the packet. This reduces a possibility that the attacker deduces privacy information of the user based on the source address and the destination address of the key creation packet. When the source address of the key creation packet is hidden, the source address of the key creation packet may further include the hidden server address, to further confuse the attacker and retain a packet format. As shown in FIG. 8, the key creation packet (Pkt_key) includes the hidden server address IP_n, the flow identifier FlowID, the encrypted server address IP_sec_server, and the encrypted key data Enc_share.

To ensure accurate forwarding of the key creation packet, in some embodiments, the destination address of the key creation packet is not encrypted, in other words, the key creation packet includes a plaintext terminal address of the terminal device, so that the key creation packet can be accurately forwarded to the terminal device based on the terminal address during network communication.

The key creation packet may be forwarded by the server to the terminal device through an intermediate routing node in the traffic link. During forwarding, to obtain an intermediate shared key shared by the intermediate routing node, the server, and the terminal device, the intermediate shared key being key information that is calculated by the intermediate routing node based on the flow identifier and that is shared with the terminal device and the server, the intermediate shared key is added to the encrypted key data in the key creation packet after being encrypted, to be sent to the terminal device, and may be further transmitted by the terminal device to the server in a subsequent operation, so that the server can encrypt a destination address of a traffic packet based on the intermediate shared key. In other words, although the intermediate shared key is generated by the intermediate routing node, the intermediate shared key is not private to the intermediate routing node, but is key information that can be shared with the terminal device and the server. For example, the intermediate shared key for the traffic link may be calculated based on the following formula:

$$Key\_share\_i = Hash(Info\_i \| FlowID),$$

where

Key_share_i represents an intermediate shared key of an $i^{th}$ intermediate routing node, info_i represents private information of the $i^{th}$ intermediate routing node, FlowID represents the flow identifier, Hash() represents a hash operation, and $\|$ represents a splicing operation.

Based on the foregoing formula, each intermediate routing node in the traffic link may calculate, based on private information of the intermediate routing node and the flow identifier, an intermediate shared key shared with the terminal device and the server]

After the intermediate routing node generates, based on the flow identifier, the intermediate shared key shared with the terminal device and the server, to enable only the terminal device to obtain the intermediate shared key based on a key acknowledgement packet, the intermediate shared key may be encrypted based on the public key of the terminal device to obtain a corresponding encryption result. For example, the encryption result corresponding to the intermediate shared key may be obtained by using the following formula:

$$Enc\_share\_i = Enc\{Key\_pub\_client, Key\_share\_i \| IP\_router\_i\},$$

where

Enc_share_i represents an encryption result corresponding to the intermediate shared key of the $i^{th}$ intermediate routing node, Key_pub_client represents the public key of the terminal device, Key_share_i represents the intermediate shared key of the $i^{th}$ intermediate routing node, IP_router_i represents an IP address of the $i^{th}$ intermediate routing node, Enc$\{\alpha, \beta\}$ indicates to perform an encryption operation on data $\beta$ by using a key $\alpha$, and $\|$ represents a splicing operation.

Based on the foregoing formula, after generating an intermediate shared key, each intermediate routing node in the traffic link may obtain a corresponding encryption result for the intermediate shared key based on the public key of the terminal device. In the encryption result, the intermediate shared key of each intermediate routing node is in a one-to-one correspondence with an IP address of the intermediate routing node.

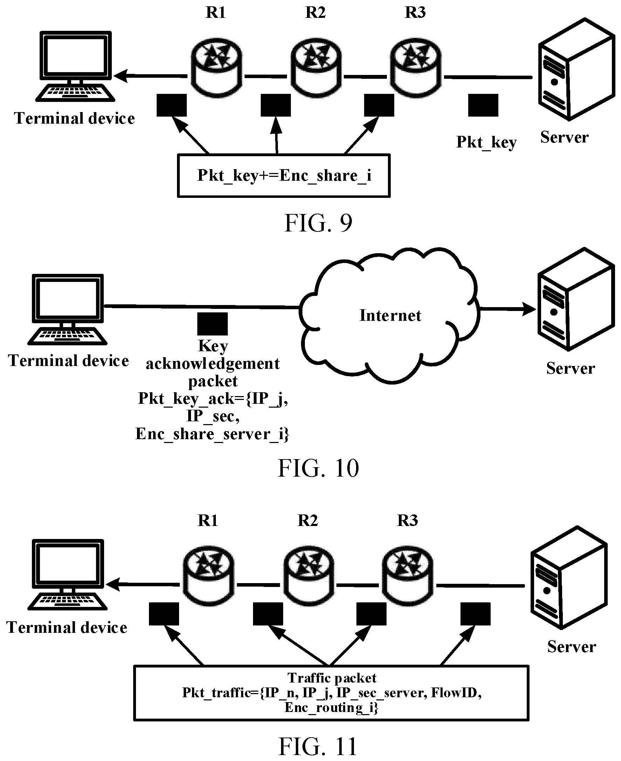

After an intermediate routing node obtains an encryption result corresponding to an intermediate shared key, to enable the terminal device to obtain the encryption result based on the key creation packet, refer to FIG. 9. As shown in FIG. 9, for example, it is determined that three intermediate routing nodes exist in the traffic link, which are denoted as R1, R2, and R3. An encryption result (for example, Enc_share_i) corresponding to each intermediate routing node in the traffic link may be added to the key creation packet (Pkt_key). In FIG. 9, the sign "+=" indicates to embed the encryption result of the intermediate shared key into the key creation packet. The encryption result may be embedded into an "extension" part in a header of the key creation packet, or may be embedded into a payload. This is not limited herein. The encryption result is added to the key creation packet, so that the terminal device can obtain not only the shared key but also the intermediate shared key based on the key creation packet.

To be specific, after generating the flow identifier and the shared key for the traffic link, the server may transmit the key creation packet including the encrypted key data (including an encrypted shared key) and the flow identifier to the terminal device through the traffic link. In a process of forwarding the key creation packet to the terminal device through an intermediate routing node in the traffic link, the key creation packet may indicate the intermediate routing node to generate an intermediate shared key based on the flow identifier and add an encrypted intermediate shared key to the encrypted key data. In this way, after obtaining the key creation packet in a subsequent operation, the terminal device may obtain, based on the encrypted key data in the key creation packet, the intermediate shared key corresponding to each intermediate routing node in the traffic link. This provides a basis for the server to encrypt a destination address of a traffic packet based on the intermediate shared key in a subsequent operation, and improves reliability and security of packet transmission.

In a possible implementation, after the server transmits the key creation packet including the encrypted key data and the flow identifier to the terminal device through the traffic link in S23, the data encryption method further includes the following operations:

S31: The terminal device receives, through the traffic link to the server, the key creation packet returned by the server for the message request packet, the source address of the key creation packet including the encrypted server address, and the key creation packet including the encrypted key data obtained through encryption by using the public key of the terminal device.

S32: The terminal device decrypts the encrypted key data by using the private key of the terminal device to obtain the shared key between the terminal device and the server and N intermediate shared keys, the N intermediate shared keys being in a one-to-one correspondence with the N intermediate routing nodes in the traffic link, and N being an integer greater than or equal to 1.

S33: The terminal device encrypts the N intermediate shared keys by using the shared key to obtain encrypted intermediate key data.

S34: The terminal device transmits, to the server, a key acknowledgement packet including the encrypted intermediate key data, a source address of the key acknowledgement packet including the encrypted terminal address.

The terminal device may receive, through the traffic link, the key creation packet transmitted by the server. After obtaining the key creation packet, the terminal device needs to determine the source address of the key creation packet, to accurately respond to the key creation packet. Because the source address in the key creation packet is hidden, the server address of the server may be obtained by decrypting the encrypted server address in the key creation packet.
As described above, the key creation packet includes the encrypted key data. The encrypted key data not only includes the encrypted shared key shared by the server and the terminal device, but also includes an encrypted intermediate shared key shared by each intermediate routing node in the traffic link, the terminal device, and the server.
Because the encrypted key data is encrypted by using the public key of the terminal device, the encrypted key data may be decrypted by using the private key of the terminal device, to obtain the shared key shared between the terminal device and the server and the intermediate shared key corresponding to each intermediate routing node in the traffic link. For example, the shared key may be obtained by using the following formula:

$$Key\_share = Dec\{Key\_pri\_client, Enc\_share\},$$

where
Key_share represents the shared key, Key_pri_client represents the private key of the terminal device, Enc_share represents the encrypted key data corresponding to the shared key, and $Dec\{\alpha, \beta\}$ indicates to perform a decryption operation on data $\beta$ by using a key $\alpha$.
The intermediate shared key may also be obtained by using the following formula:

$$Key\_share\_i, IP\_router\_i = Dec\{Key\_pri\_client, Enc\_share\_i\},$$

where
Key_share _i represents the intermediate shared key of the $i^{th}$ intermediate routing node, IP_router_i represents the IP address of the $i^{th}$ intermediate routing node, Key_pri_client represents the private key of the terminal device, Enc_share_i represents the encryption result corresponding to the intermediate shared key of the $i^{th}$ intermediate routing node, and $Dec\{\alpha, \beta\}$ indicates to perform a decryption operation on data $\beta$ by using a key $\alpha$.
After obtaining the intermediate shared key corresponding to each intermediate routing node in the traffic link, the terminal device needs to transmit the intermediate shared key to the server. To enable only the server to obtain the intermediate shared key, the N intermediate shared keys may be encrypted by using the shared key between the terminal device and the server, to obtain the encrypted intermediate key data. For example, the encrypted intermediate key data may be calculated based on the following formula:

$$Enc\_share\_server\_i = Enc\{Key\_share, Key\_share\_i\|IP\_router\_i\},$$

where
Enc_share_server_i represents encrypted intermediate key data of the $i^{th}$ intermediate routing node, Key_share represents the shared key, Key_share _i represents the intermediate shared key of the $i^{th}$ intermediate routing node, IP_router_i represents the IP address of the ith intermediate routing node, Enc{$\alpha$, $\beta$} indicates to perform an encryption operation on data $\beta$ by using a key $\alpha$, and $\|$ represents a splicing operation.

Based on the foregoing formula, an intermediate shared key may be encrypted by using the shared key to obtain corresponding encrypted intermediate key data. The intermediate shared key of each intermediate routing node in the encrypted intermediate key data is in a one-to-one correspondence with an IP address of the intermediate routing node.

The terminal device may transmit the key acknowledgement packet including the encrypted intermediate key data to the server, so that the server obtains the key acknowledgement packet to obtain the intermediate shared key corresponding to each intermediate routing node in the traffic link. This provides a basis for encrypting a destination address of a traffic packet based on the intermediate shared key in a subsequent operation.

The source address in the key acknowledgement packet is also hidden, to be specific, the source address in the key acknowledgement packet is not the terminal address but the encrypted terminal address, to prevent an attacker from obtaining a relationship between the source address and a destination address in the key acknowledgement packet after intercepting the packet during forwarding of the packet. This reduces a possibility that the attacker deduces privacy information of the user based on the source address and the destination address of the key acknowledgement packet. When the source address of the key acknowledgement packet is hidden, the source address of the key acknowledgement packet may further include the hidden terminal address, to further confuse the attacker and retain a packet format. As shown in FIG. 10, the key acknowledgement packet (Pkt_key_ack) includes the hidden terminal address IP_j, the encrypted terminal address IP_sec, and the encrypted intermediate key data Enc_share_server_i.

To ensure accurate forwarding of the key acknowledgement packet, in some embodiments, the destination address of the key acknowledgement packet is not encrypted, in other words, the key acknowledgement packet includes a plaintext server address of the server, so that the key acknowledgement packet can be accurately forwarded to the server based on the server address during network communication.

In addition, as shown in FIG. 10, the key acknowledgement packet does not need to be forwarded from the terminal device to the server based on the traffic link. To be specific, the key acknowledgement packet only needs to be successfully forwarded from the terminal device to the server based on the server address, and does not necessarily need to be forwarded based on an intermediate routing node in the traffic link.

After obtaining the key creation packet, the terminal device may determine, based on the encrypted key data in the key creation packet, the intermediate shared key corresponding to each intermediate routing node in the traffic link for transmitting a traffic packet, and transmit a key acknowledgement packet including encrypted intermediate key data (an intermediate shared key encrypted based on the shared key) to the server, so that the server can obtain the intermediate shared key corresponding to the intermediate routing node. This provides a basis for the server to encrypt a destination address of a traffic packet based on the intermediate shared key in a subsequent operation, and improves reliability and security of packet transmission.

In a possible implementation, after the terminal device transmits the key acknowledgement packet including the encrypted intermediate key data to the server in S34, the data encryption method further includes the following operations:

S41: The server receives the key acknowledgement packet returned by the terminal device in response to the key creation packet, the source address of the key acknowledgement packet including the encrypted terminal address, the key acknowledgement packet including the encrypted intermediate key data, the encrypted intermediate key data being obtained by encrypting the N intermediate shared keys by using the shared key, and the N intermediate shared keys being in a one-to-one correspondence with the N intermediate routing nodes.

S42: The server decrypts the encrypted intermediate key data by using the shared key to obtain the N intermediate shared keys.

S43: The server obtains, based on the N intermediate shared keys and routing addresses of the N intermediate routing nodes, encrypted routing information respectively corresponding to the N intermediate routing nodes, encrypted routing information corresponding to an ith intermediate routing node among the N intermediate routing nodes being obtained by encrypting routing information of the ith intermediate routing node and routing information of a next-hop node of the ith intermediate routing node by using an intermediate shared key corresponding to the ith intermediate routing node.

S44: The server adds the encrypted routing information to the traffic packet, a destination address of the traffic packet being obtained by encrypting the terminal address by using a target intermediate shared key, and the target intermediate shared key being an intermediate shared key of a previous-hop intermediate routing node of the terminal device in the traffic link.

The server may receive the key acknowledgement packet returned by the terminal device. After receiving the key acknowledgement packet, the server needs to determine the source address of the key acknowledgement packet, so as to determine that the terminal device has successfully obtained the key creation packet and returned a corresponding key acknowledgement packet. Because the source address in the key acknowledgement packet is hidden, the server may decrypt the encrypted terminal address in the key acknowledgement packet to determine that the real source address of the key acknowledgement packet is the terminal address of the terminal device.

The key acknowledgement packet includes the encrypted intermediate key data. As described above, the encrypted intermediate key data is obtained by the terminal device by encrypting, by using the shared key, the intermediate shared key corresponding to each intermediate routing node in the traffic link, and the shared key is key information shared between the terminal device and the server. Therefore, the server may decrypt the encrypted intermediate key data based on the shared key to obtain the intermediate shared key corresponding to each intermediate routing node in the traffic link. For example, the intermediate shared key may be obtained by using the following formula:

$$\text{Key\_share\_i, IP\_router\_i} = \text{Dec}\{\text{Key\_share, Enc\_share\_server\_i}\},$$

where
Key_share _i represents the intermediate shared key of the $i^{th}$ intermediate routing node, IP_router_i represents the IP address of the $i^{th}$ intermediate routing node, Key_share represents the shared key, Enc_share_server_i represents the encrypted intermediate key data of the $i^{th}$ intermediate routing node, and Dec$\{\alpha, \beta\}$ indicates to perform a decryption operation on data $\beta$ by using a key $\alpha$.

Based on the foregoing formula, the server may decrypt the encrypted intermediate key data based on the shared key to obtain the intermediate shared key corresponding to each intermediate routing node in the traffic link.

After obtaining the intermediate shared key corresponding to each intermediate routing node in the traffic link, the server may store the intermediate shared key, so that the server can directly obtain the stored intermediate shared key to encrypt each intermediate routing node in the traffic link when subsequently generating the traffic packet to be transmitted based on the traffic link.

After obtaining the intermediate shared key corresponding to each intermediate routing node in the traffic link, to encrypt the destination address of the traffic packet to be transmitted based on the traffic link, the server may determine, for each intermediate routing node in the traffic link, encrypted routing information for indicating a next-hop node of each intermediate routing node based on routing information of each intermediate routing node, routing information of a next-hop node, and a corresponding intermediate shared key, to perform encryption for each intermediate routing node in the traffic link. The terminal address is used as routing information of a next-hop node of a previous-hop intermediate routing node of the terminal device in the traffic link, and is also encrypted by using a corresponding target intermediate shared key. The target intermediate shared key is an intermediate shared key corresponding to the previous-hop intermediate routing node of the terminal device. Encrypted routing information of an intermediate routing node is information data that is encrypted by using a corresponding intermediate shared key and that is configured for indicating a next-hop node of the intermediate routing node. For example, encrypted routing information corresponding to each intermediate routing node in the traffic link may be obtained by using the following formula:

$$\text{Enc\_routing\_i} = \text{Enc}\{\text{Key\_share\_i, IP\_router\_i}\|\text{IP\_router\_i+1}\},$$

where
Enc_routing_i represents encrypted routing information of the $i^{th}$ intermediate routing node, Key_share_i represents the intermediate shared key of the $i^{th}$ intermediate routing node, IP_router_i represents the IP address of the $i^{th}$ intermediate routing node, IP_router_i+1 represents an IP address of a next-hop node of the $i^{th}$ intermediate routing node, Enc$\{\alpha, \beta\}$ indicates to perform an encryption operation on data $\beta$ by using a key $\alpha$, and $\|$ represents a splicing operation.

Based on the foregoing formula, routing information of the next-hop node of the $i^{th}$ intermediate routing node may be encrypted by using the intermediate shared key corresponding to the $i^{th}$ intermediate routing node, to obtain corresponding encrypted routing information. Routing information is encrypted, so that an intermediate routing node in the traffic link can obtain only routing information of a next-hop node. This reduces a risk that an attacker hijacks an intermediate routing node to obtain the destination address of the traffic packet.

When the server adds the encrypted routing information to the traffic packet, after receiving the traffic packet, each intermediate routing node in the traffic link may decrypt the encrypted routing information based on an intermediate shared key corresponding to the intermediate routing node, to obtain routing information of the intermediate routing node and routing information of a corresponding next-hop node. For example, decrypted routing information may be obtained by using the following formula:

$$IP\_router\_i, IP\_router\_i+1 = Dec\{Key\_share\_i, Enc\_routing\_i\},$$

where

IP_router_i represents the IP address of the $i^{th}$ intermediate routing node, IP_router_i+1 represents the IP address of the next-hop node of the $i^{th}$ intermediate routing node, Key_share _i represents the intermediate shared key of the $i^{th}$ intermediate routing node, Enc_routing_i represents the encrypted routing information of the $i^{th}$ intermediate routing node, and Dec{$\alpha$, $\beta$} indicates to perform a decryption operation on data $\beta$ by using a key $\alpha$.

Based on the foregoing formula, the encrypted routing information may be decrypted based on the intermediate shared key of the $i^{th}$ intermediate routing node to obtain the IP address of the $i^{th}$ intermediate routing node and the IP address of the next-hop node. If the IP address of the $i^{th}$ intermediate routing node is consistent with an IP address of an intermediate routing node, the intermediate routing node may forward the traffic packet to the IP address of the next-hop node. If the IP address of the $i^{th}$ intermediate routing node is inconsistent with an IP address of an intermediate routing node, the intermediate routing node may directly discard the traffic packet. To be specific, after an intermediate routing node decrypts the encrypted routing information based on an intermediate shared key corresponding to the intermediate routing node, routing information of a specific intermediate routing node and routing information of a corresponding next-hop node are obtained. If the routing information of the specific intermediate routing node is consistent with routing information of the intermediate routing node, the intermediate routing node may forward the traffic packet to the next-hop node. That is, the traffic packet can be sequentially forwarded in the traffic link based on the encrypted routing information.

The server may add the encrypted routing information to the traffic packet, so that the traffic packet does not include a plaintext destination address. Instead, each intermediate routing node in the traffic link sequentially forwards the traffic packet to a next-hop node based on corresponding encrypted routing information, until the traffic packet is successfully forwarded to the terminal device. The terminal address is encrypted by using the target intermediate shared key corresponding to the previous-hop intermediate routing node of the terminal device in the traffic link. Specifically, the terminal address is used as routing information of the next-hop node of the previous-hop intermediate routing node of the terminal device, and may be encrypted in encrypted routing information of the previous-hop intermediate routing node by using the target intermediate shared key. In this way, the destination address in the traffic packet is encrypted.

In addition, the source address in the traffic packet is still hidden. To be specific, the source address in the traffic packet is not the server address but the encrypted server address. When both the source address and the destination address of the traffic packet are hidden, to further confuse an attacker and retain a packet format, the source address of the traffic packet may further include the hidden server address, and correspondingly, the destination address of the traffic packet may further include the hidden terminal address. As shown in FIG. 11, the traffic packet (Pkt_traffic) may include the hidden server address IP_n, the hidden terminal address IP_j, the encrypted server address IP_sec_server, and the encrypted routing information Enc_routing_i.

After obtaining, based on the key acknowledgement packet, the intermediate shared key corresponding to each intermediate routing node in the traffic link, the server may encrypt next-hop routing information of each intermediate routing node in the traffic link based on the intermediate shared key, so that the traffic packet is accurately forwarded to the terminal device based on encrypted routing information when the traffic packet does not include a plaintext destination address. In other words, based on encryption of the source address of the traffic packet, the destination address can also be encrypted by using the encrypted routing information. In this way, when an attacker intercepts the traffic packet, the attacker can obtain neither a transmit end of the traffic packet nor a receive end of the traffic packet. This further reduces a possibility that the attacker deduces the source address and the destination address in the traffic packet, and improves security of packet transmission.

Correspondingly, in a possible implementation, in S403 in which the terminal device receives the traffic packet returned for the message request packet, the data encryption method specifically includes the following operation:

The terminal device receives, through the traffic link, the traffic packet returned by the server for the message request packet, the destination address of the traffic packet being obtained by encrypting the terminal address by using the target intermediate shared key, and the target intermediate shared key being an intermediate shared key corresponding to the previous-hop intermediate routing node of the terminal device in the traffic link.

When the server adds the encrypted routing information to the traffic packet, intermediate routing nodes in the traffic link may decrypt the encrypted routing information, so that the traffic packet is sequentially forwarded to the terminal device through the intermediate routing nodes in the traffic link. In this case, the traffic packet does not include a plaintext terminal address. Instead, the terminal address is encrypted by using the target intermediate shared key (the intermediate shared key corresponding to the previous-hop intermediate routing node of the terminal device) in the traffic link. In this way, both the source address and the destination address of the traffic packet are hidden in the packet through encryption.

Based on encryption of the source address of the traffic packet, the destination address may be further encrypted by using the target intermediate shared key. In this case, the traffic packet may be sequentially forwarded to the terminal device based on the intermediate routing nodes in the traffic link. In other words, the traffic packet can be successfully forwarded from the server to the terminal device when both the source address and the destination address are encrypted. This further reduces a possibility that the attacker deduces the source address and the destination address in the traffic packet, and improves security of packet transmission.

After obtaining the key acknowledgement packet transmitted by the terminal device, the server needs to decrypt, based on the shared key, the encrypted intermediate key data in the key acknowledgement packet. If the server keeps maintaining the shared key shared with the terminal device for this purpose, load of the server undoubtedly increases. Therefore, in a possible implementation, before decrypting the encrypted intermediate key data based on the shared key in S42, the server may obtain the shared key in the following manner:

The server decrypts the encrypted terminal address by using the private key of the server to obtain the terminal address;

the server generates a flow identifier for the traffic link based on the terminal address and the server address; and

the server generates a shared key by using the terminal address and the flow identifier.

Because the key acknowledgement packet includes the encrypted terminal address, the encrypted terminal address may be decrypted based on the private key of the server to obtain the terminal address. The server may re-generate the flow identifier for the traffic link based on the terminal address and the server address. For example, the flow identifier of the traffic link may be determined based on the following formula:

$$FlowID = Hash(IP\_m\|IP\_i\|Port\_server\|Port\_client\|Protocol),$$

where

FlowID represents the flow identifier, $IP\_m$ represents the server address of the server, $IP\_i$ represents the terminal address of the terminal device, Port_server represents a server port of the server, Port_client represents a terminal port of the terminal device, Protocol represents a communication protocol between the server and the terminal device, Hash() represents a hash operation, and ‖ represents a splicing operation.

Based on determining of the flow identifier of the traffic link, the server may re-determine the shared key corresponding to the terminal device based on the terminal address and the flow identifier. For example, the shared key for the traffic link may be calculated based on the following formula:

$$Key\_share = Hash(info\_server\|FlowID),$$

where

Key_share represents the shared key, info_server represents private information of the server, FlowID represents the flow identifier, Hash() represents a hash operation, and ‖ represents a splicing operation.

The server does not need to keep maintaining the shared key shared with the terminal device. When the server needs to decrypt the encrypted intermediate key data in the key acknowledgement packet based on the shared key, the server may re-generate, based on the terminal address and the server address, the flow identifier and the shared key that correspond to the traffic link, and decrypt the encrypted intermediate key data by using the directly generated shared key. This reduces costs of maintaining the shared key by the server.

Similarly, to reduce costs of maintaining an intermediate shared key by an intermediate routing node, in a possible implementation, the traffic packet further includes a flow identifier, and the flow identifier is configured for indicating the intermediate routing node to generate a corresponding intermediate shared key based on the flow identifier, and decrypt encrypted routing information by using the intermediate shared key to obtain routing information of a next-hop node.

When the traffic packet includes encrypted routing information, an intermediate routing node needs to decrypt the encrypted routing information based on a corresponding intermediate shared key, to obtain routing information of a next-hop node. However, if the intermediate routing node keeps maintaining the intermediate shared key for this purpose, costs are clearly incurred. Therefore, the traffic packet may further include a flow identifier. As shown in FIG. 11, the traffic packet (Pkt_traffic) may further include a flow identifier FlowID, so that an intermediate routing node can directly generate a corresponding intermediate shared key based on the flow identifier. For example, the intermediate shared key may be calculated based on the following formula:

$$Key\_share\_i = Hash(Info\_i\|FlowID),$$

where

Key_share_i represents an intermediate shared key of an $i^{th}$ intermediate routing node, info_i represents private information of the corresponding $i^{th}$ intermediate routing node, FlowID represents the flow identifier, Hash() represents a hash operation, and ‖ represents a splicing operation.

The intermediate routing node does not need to keep maintaining the intermediate shared key shared with the terminal device and the server. When the intermediate routing node needs to decrypt the encrypted routing information in the traffic packet based on the intermediate shared key, the intermediate routing node may re-generate a corresponding intermediate shared key based on the flow identifier. In this way, costs of maintaining the intermediate shared key by the intermediate routing node are reduced.

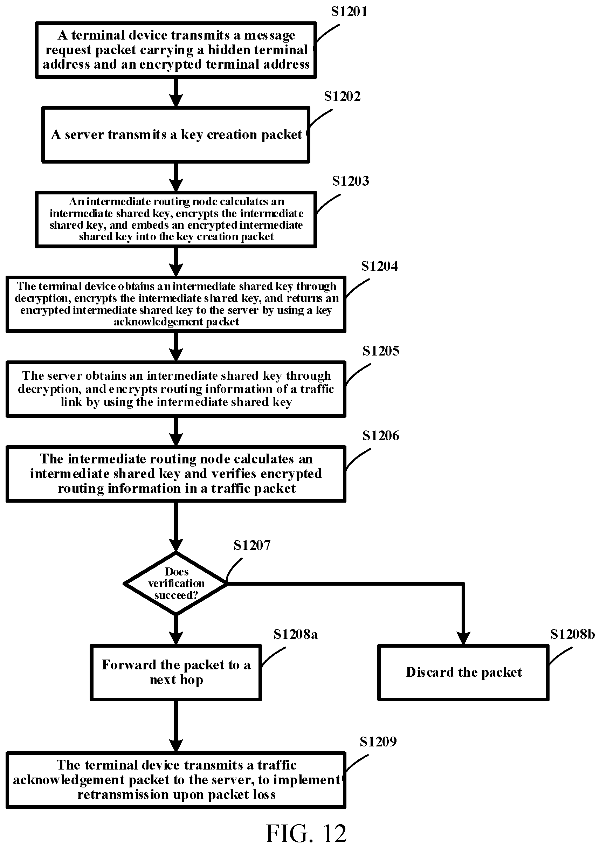

A specific process of the data encryption method in some embodiments of this application in an actual case is described below. As shown in FIG. 12, the specific process of the data encryption method may include any one or more of the following operations:

S1201: A terminal device transmits a message request packet carrying a hidden terminal address and an encrypted terminal address.

The terminal device transmits the message request packet to a server. The message request packet may be configured for requesting to obtain target content from the server. The message request packet does not include a plaintext terminal address. Instead, the encrypted terminal address is carried in the message request packet, to hide a source address of the message request packet by encrypting the source address. In addition, the message request packet further carries the hidden terminal address, to further confuse an attacker and retain a packet format.

S1202: The server transmits a key creation packet.

After the server obtains the message request packet, the server transmits the key creation packet to obtain an intermediate shared key corresponding to an intermediate routing node included in a traffic link for transmitting a traffic packet. The key creation packet does not include a plaintext server address either. Instead, an encrypted server address is carried in the key creation packet, to hide a source address of the key creation packet by encrypting the source address. In addition, the key creation packet further carries a hidden server address, to further confuse an attacker and retain a packet format.

In addition, the key creation packet further carries a shared key shared between the server and the terminal device, and a flow identifier corresponding to a traffic link.

S1203: An intermediate routing node calculates an intermediate shared key, encrypts the intermediate shared key, and embeds an encrypted intermediate shared key into the key creation packet.

When forwarding the key creation packet, the intermediate routing node obtains calculates a corresponding intermediate shared key based on information about the intermediate routing node and information about the flow identifier, encrypts the calculated intermediate shared key by using a public key corresponding to a destination address (the terminal device), and embeds an encrypted intermediate shared key into the key creation packet, so that the terminal device can obtain the intermediate shared key based on the key creation packet.

S1204: The terminal device obtains an intermediate shared key through decryption, encrypts the intermediate shared key, and returns an encrypted intermediate shared key to the server by using a key acknowledgement packet.

After obtaining the key creation packet, the terminal device may decrypt, based on a private key of the terminal device, encrypted intermediate shared key information carried in the key creation packet, encrypt an obtained intermediate shared key by using the shared key shared with the server, and embed the encrypted intermediate shared key into the key acknowledgement packet, so that the encrypted intermediate shared key can be returned to the server by using the key acknowledgement packet. The key acknowledgement packet does not include a plaintext terminal address either. Instead, the encrypted terminal address is carried in the key acknowledgement packet, to hide a source address of the key acknowledgement packet by encrypting the source address. In addition, the key acknowledgement packet further carries the hidden terminal address, to further confuse an attacker and retain a packet format.

S1205: The server obtains an intermediate shared key through decryption, and encrypts routing information of the traffic link by using the intermediate shared key.

After receiving the key acknowledgement packet, the server may decrypt, by using the shared key shared with the terminal device, encrypted intermediate shared key information carried in the key acknowledgement packet to obtain an intermediate shared key shared with an intermediate routing node in the traffic link, and encrypt routing information of the intermediate routing node in the traffic link by using the intermediate shared key to obtain corresponding encrypted routing information. The encrypted routing information is added to a traffic packet. In this way, when the traffic packet does not include a plaintext destination address, the traffic packet can be forwarded based on encrypted routing information that is carried in the traffic packet and that corresponds to each hop of the intermediate routing node. In other words, a destination address of the traffic packet may be encrypted by using the intermediate shared key. Based on this, a source address of the traffic packet can still be encrypted, so that both the source address and the destination address in the traffic packet are hidden.

S1206: The intermediate routing node calculates an intermediate shared key and verifies the encrypted routing information in the traffic packet.

After receiving the traffic packet, the intermediate routing node may re-calculate an intermediate shared key based on the flow identifier, and decrypt, by using the intermediate shared key, the encrypted routing information carried in the traffic packet to obtain decrypted routing information and routing information of a corresponding next-hop node.

S1207: The intermediate routing node verifies whether routing information of the intermediate routing node is consistent with the decrypted routing information.

After decrypting the encrypted routing information carried in the traffic packet, the intermediate routing node needs to verify whether the routing information of the intermediate routing node is consistent with the decrypted routing information.

S1208a: If the routing information of the intermediate routing node is consistent with the decrypted routing information, the intermediate routing node may forward the traffic packet to the next-hop node, to sequentially forward the traffic packet in the traffic link.

S1208b: If the routing information of the intermediate routing node is inconsistent with the decrypted routing information, the intermediate routing node may discard the packet.

S1209: The terminal device transmits a traffic acknowledgement packet to the server, to implement retransmission upon packet loss.

After receiving the traffic packet, the terminal device may transmit the traffic acknowledgement packet to the server. The traffic acknowledgement packet is configured for enabling the server to learn of packet loss information of the terminal device and retransmit a traffic packet to implement retransmission of lost data when the terminal device encounters packet loss. The traffic acknowledgement packet does not include a plaintext terminal address either. Instead, the encrypted terminal address is carried in the traffic acknowledgement packet, to hide a source address of the traffic acknowledgement packet by encrypting the source address. The traffic acknowledgement packet further carries the hidden terminal address, to further confuse an attacker and retain a packet format.

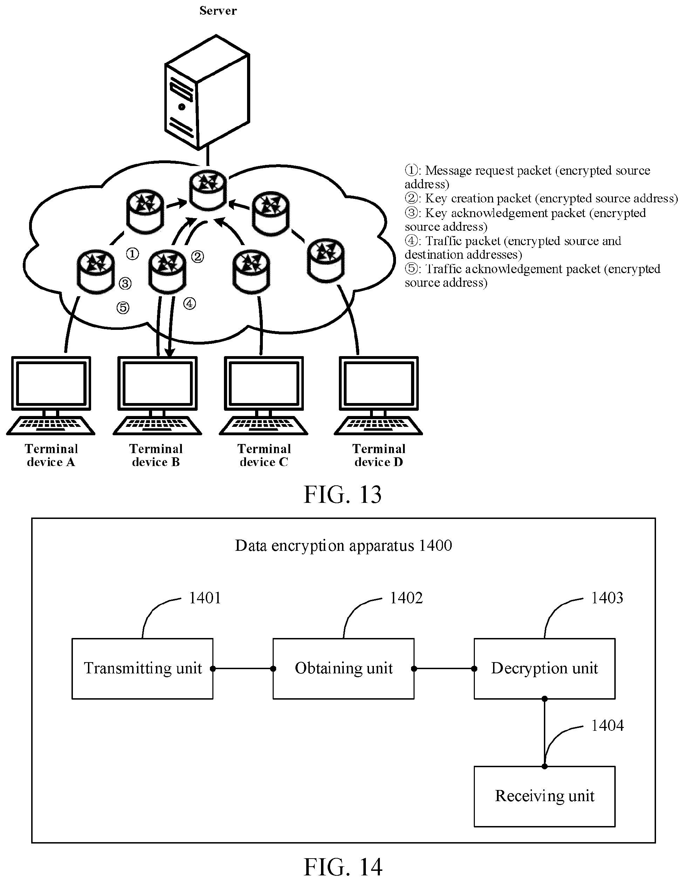

As shown in FIG. 13, according to the foregoing data encryption method, network communication between a server and a terminal device B is used as an example to describe network communication between a server and a terminal device. In this application, network communication between the terminal device B and the server may be implemented by using a message request packet in which a source address is encrypted, a key creation packet in which a source address is encrypted, a key acknowledgement packet in which a source address is encrypted, a traffic packet in which a source address and a destination address are encrypted, and a traffic acknowledgement packet in which a source address is encrypted. During packet exchange, at least one of a source address and a destination address of a packet exchanged between the server and the terminal device is encrypted, and both source addresses and destination addresses of traffic packets with the largest quantity are encrypted. This reduces a possibility that an attacker obtains user privacy based on a source address and a destination address, and enhances security of packet exchange.

FIG. 14 is a structural diagram of a data encryption apparatus according to some embodiments of this application. The data encryption apparatus 1400 may include a transmitting unit 1401, an obtaining unit 1402, a decryption unit 1403, and a receiving unit 1404.

The transmitting unit 1401 is configured to transmit a message request packet to a server, a source address of the message request packet including an encrypted terminal address, and the encrypted terminal address being obtained by encrypting a terminal address of a terminal device by using a public key of the server.

The obtaining unit 1402 is configured to receive a traffic packet returned by the server for the message request packet, a source address of the traffic packet including an encrypted server address, and the encrypted server address being obtained by encrypting a server address of the server by using a public key of the terminal device.

The decryption unit 1403 is configured to decrypt the encrypted server address by using a private key of the terminal device to obtain a to-be-determined server address.

The receiving unit 1404 is configured to obtain traffic data from the traffic packet in response to the to-be-determined server address being consistent with the server address.

In a possible implementation, the source address of the message request packet further includes a hidden terminal address, and the hidden terminal address is a virtual terminal address different from the terminal address. The source address of the traffic packet further includes a hidden server address, and the hidden server address is a virtual server address different from the server address.

In a possible implementation, the transmitting unit 1401 is further configured to:

receive, through a traffic link to the server, a key creation packet returned by the server for the message request packet, a source address of the key creation packet including the encrypted server address, and the key creation packet including encrypted key data obtained through encryption by using the public key of the terminal device;

decrypt the encrypted key data by using the private key of the terminal device to obtain a shared key between the terminal device and the server and N intermediate shared keys, the N intermediate shared keys being in a one-to-one correspondence with N intermediate routing nodes in the traffic link, and N being an integer greater than or equal to 1;

encrypt the N intermediate shared keys by using the shared key to obtain encrypted intermediate key data; and

transmit, to the server, a key acknowledgement packet including the encrypted intermediate key data, a source address of the key acknowledgement packet including the encrypted terminal address.

In a possible implementation, the obtaining unit 1402 is configured to receive, through the traffic link, the traffic packet returned by the server for the message request packet, a destination address of the traffic packet being obtained by encrypting the terminal address by using a target intermediate shared key, and the target intermediate shared key being an intermediate shared key corresponding to a previous-hop intermediate routing node of the terminal device in the traffic link.

In a possible implementation, the transmitting unit 1401 is further configured to:

determine a packet receiving result for the traffic packet; and

transmit a traffic acknowledgement packet including the packet receiving result to the server, a source address of the traffic acknowledgement packet including the encrypted terminal address.

In a possible implementation, the obtaining unit 1402 is further configured to:
receive a traffic retransmission packet returned by the server in response to the traffic acknowledgement packet, the traffic retransmission packet being a traffic packet that is identified based on the packet receiving result and that is not received by the terminal device, and a source address of the traffic retransmission packet including the encrypted server address.

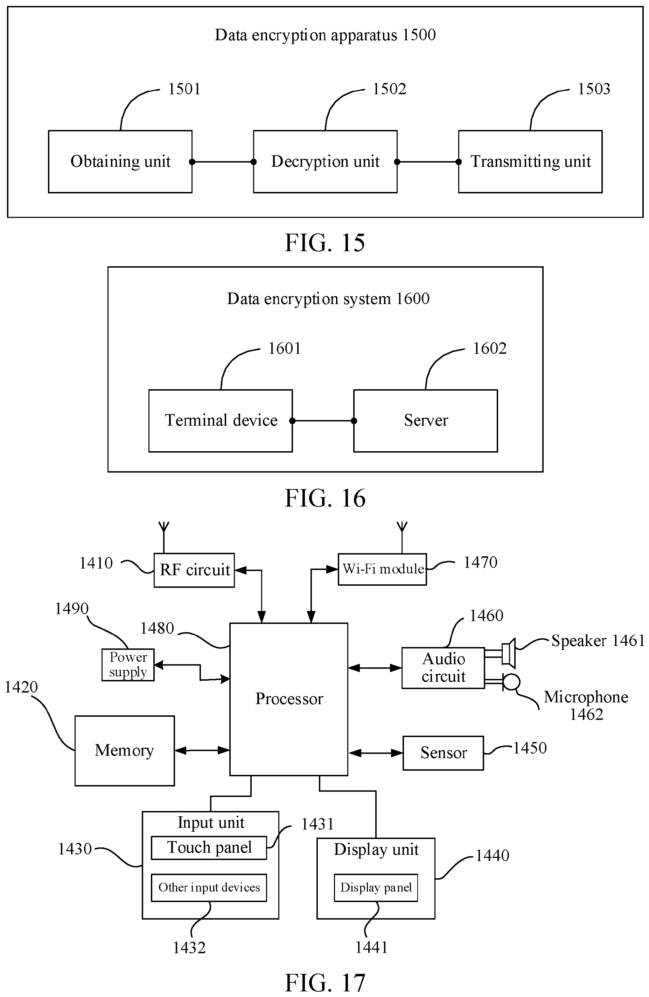

FIG. 15 is a structural diagram of another data encryption apparatus according to some embodiments of this application. The data encryption apparatus 1500 may include an obtaining unit 1501, a decryption unit 1502, and a transmitting unit 1503.

The obtaining unit 1501 is configured to receive a message request packet transmitted by a terminal device, a source address of the message request packet including an encrypted terminal address, and the encrypted terminal address being obtained by encrypting a terminal address of the terminal device by using a public key of the server.

The decryption unit 1502 is configured to decrypt the encrypted terminal address by using a private key of the server to obtain the terminal address.

The transmitting unit 1503 is configured to transmit, to the terminal device based on the terminal address, a traffic packet returned for the message request packet, a source address of the traffic packet including an encrypted server address, and the encrypted server address being obtained by encrypting a server address of the server by using a public key of the terminal device.

In a possible implementation, the transmitting unit 1503 is configured to:

determine a traffic link from the server to the terminal device based on the terminal address, the traffic link including N intermediate routing nodes, and N being an integer greater than or equal to 1; and

transmit, to the terminal device through the N intermediate routing nodes in the traffic link, the traffic packet returned for the message request packet.

In a possible implementation, the transmitting unit 1503 is further configured to:

generate a flow identifier and a shared key for the traffic link based on the terminal address and the server address;

encrypt the shared key by using the public key of the terminal device to obtain encrypted key data; and

transmit, to the terminal device through the traffic link, a key creation packet including the encrypted key data and the flow identifier, a source address of the key creation packet including the encrypted server address, and the key creation packet being configured for indicating the N intermediate routing nodes to generate an intermediate shared key based on the flow identifier, encrypt the intermediate shared key by using the public key of the terminal device, and add an encryption result to the encrypted key data.

In a possible implementation, the obtaining unit 1501 is further configured to:

receive a key acknowledgement packet returned by the terminal device in response to the key creation packet, a source address of the key acknowledgement packet including the encrypted terminal address, the key acknowledgement packet including encrypted intermediate key data, the encrypted intermediate key data being obtained by encrypting N intermediate shared keys by using the shared key, and the N intermediate shared keys being in a one-to-one correspondence with the N intermediate routing nodes;

decrypt the encrypted intermediate key data by using the shared key to obtain the N intermediate shared keys;

obtain, based on the N intermediate shared keys and routing addresses of the N intermediate routing nodes, encrypted routing information respectively corresponding to the N intermediate routing nodes, encrypted routing information corresponding to an $i^{th}$ intermediate routing node among the N intermediate routing nodes being obtained by encrypting routing information of the $i^{th}$ intermediate routing node and routing information of a next-hop node of the $i^{th}$ intermediate routing node by using an intermediate shared key corresponding to the $i^{th}$ intermediate routing node; and

add the encrypted routing information to the traffic packet, a destination address of the traffic packet being obtained by encrypting the terminal address by using a target intermediate shared key, and the target intermediate shared key being an intermediate shared key of a previous-hop intermediate routing node of the terminal device in the traffic link.

In a possible implementation, the obtaining unit 1501 is further configured to:

decrypt the encrypted terminal address by using a private key of the server to obtain the terminal address;

generate the flow identifier for the traffic link based on the terminal address and the server address; and

generate the shared key by using the terminal address and the flow identifier.

In a possible implementation, the traffic packet further includes a flow identifier, and the flow identifier is configured for indicating the intermediate routing node to generate a corresponding intermediate shared key based on the flow identifier, and decrypt the encrypted routing information by using the intermediate shared key to obtain the routing information of the next-hop node.

In a possible implementation, the transmitting unit 1503 is further configured to: receive a traffic acknowledgement packet that is transmitted by the terminal device and that includes a packet receiving result, a source address of the traffic acknowledgement packet including the encrypted terminal address, and the packet receiving result being configured for identifying a receiving status of the terminal device for the traffic packet; and
transmit a target traffic packet as a traffic retransmission packet to the terminal device when it is determined, based on the packet receiving result, that the terminal device has not received the target traffic packet, a source address of the traffic retransmission packet including the encrypted server address.

Based on the embodiments corresponding to FIG. 1 to FIG. 13, FIG. 16 is a structural diagram of a data encryption system according to an embodiment of this application. The data encryption system 1600 includes a terminal device 1601 and a server 1602. The terminal device 1601 is configured to perform the method in the foregoing method embodiments. The server 1602 is configured to perform the method in the foregoing method embodiments.

Embodiments of this application further provide a computer device. The computer device is the foregoing computer device, and may include a terminal device or a server. The foregoing data encryption apparatus may be configured in the computer device. The following describes the computer device with reference to the accompanying drawings.

If the computer device is a terminal device, as shown in FIG. 17, embodiments of this application provide a terminal device. For example, the terminal device is a mobile phone.

FIG. 17 is a block diagram of a partial structure of a mobile phone related to a terminal device according to an embodiment of this application. As shown in FIG. 17, the mobile phone includes components such as a radio frequency (RF) circuit 1410, a memory 1420, an input unit 1430, a display unit 1440, a sensor 1450, an audio circuit 1460, a wireless fidelity (Wi-Fi) module 1470, a processor 1480, and a power supply 1490. A person skilled in the art can understand that the structure of the mobile phone shown in FIG. 17 does not constitute a limitation on the mobile phone, and the mobile phone may include more or fewer components than those shown in the figure, or some components may be combined, or the components may be disposed in different manners.

The following specifically describes the components of the mobile phone with reference to FIG. 17.

The RF circuit 1410 may be configured to receive and transmit a signal during information transmitting/receiving or calling. Particularly, after receiving downlink information from a base station, the RF circuit 1410 transmits the information to the processor 1480 for processing. In addition, the RF circuit 1410 transmits related uplink data to the base station.

The memory 1420 may be configured to store a software program and module. The processor 1480 runs the software program and module stored in the memory 1420, to implement various functional applications and data processing of the mobile phone. The memory 1420 may mainly include a program storage area and a data storage area. The program storage area may store an operating system, an application required by at least one function (for example, a sound playing function and an image playing function), or the like. The data storage area may store data (for example, audio data and an address book) created based on use of the mobile phone, or the like. In addition, the memory 1420 may include a high-speed random access memory, or may include a nonvolatile memory, for example, at least one magnetic disk storage device or a flash memory device, or other volatile solid-state storage device.

The input unit 1430 may be configured to receive input digit or character information, and generate a key signal input related to user settings and function control of the mobile phone. Specifically, the input unit 1430 may include a touch panel 1431 and other input devices 1432.

The display unit 1440 may be configured to display information inputted by a user or information provided for the user, and various menus of the mobile phone. The display unit 1440 may include a display panel 1441.

The mobile phone may further include at least one sensor 1450, for example, an optical sensor, a motion sensor, and other sensors.

The audio circuit 1460, a speaker 1461, and a microphone 1462 may provide audio interfaces between the user and the mobile phone.

Wi-Fi is a short-distance wireless transmission technology. The mobile phone may help, through the Wi-Fi module 1470, the user receive and transmit an email, browse a web page, access stream media, and the like, to provide wireless broadband Internet access for the user.

The processor 1480 is a control center of the mobile phone, and is connected to various parts of the entire mobile phone through various interfaces and lines. The processor 1480 executes various functions of the mobile phone and performs data processing by running or executing a software program and/or a module stored in the memory 1420 and invoking data stored in the memory 1420.

The mobile phone further includes the power supply 1490 (for example, a battery) for supplying power to various components.

In some embodiments, the processor 1480 included in the terminal device is further configured to perform the data encryption method on the terminal device side in the embodiments of this application.

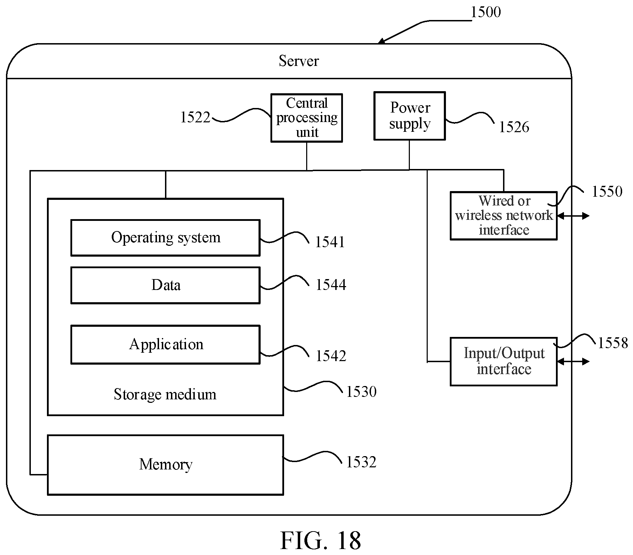

If the computer device is a server, embodiments of this application further provide a server, as shown in FIG. 18. FIG. 18 is a structural diagram of a server 1500 according to an embodiment of this application. The server 1500 may vary greatly due to different configurations or performance, and may include one or more central processing units (CPUs) 1522 (for example, one or more processors), a memory 1532, and one or more storage media 1530 (for example, one or more mass storage devices) that store an application 1542 or data 1544. The memory 1532 and the storage medium 1530 may be transient storage or persistent storage. A program stored in the storage medium 1530 may include one or more modules (not shown in the figure), and each module may include a series of instruction operations on the server. Further, the CPU 1522 may be configured to communicate with the storage medium 1530, and perform, on the server 1500, a series of instruction operations in the storage medium 1530.

The server 1500 may further include one or more power supplies 1526, one or more wired or wireless network interfaces 1550, one or more input/output interfaces 1558, and/or one or more operating systems 1541 such as Windows Server™, Mac OS X™, UNIX™, Linux™, or FreeBSD™.

Operations performed by the server in the foregoing embodiments may be based on the server structure shown in FIG. 18.

In addition, embodiments of this application further provide a storage medium. The storage medium is configured to store a computer program, and the computer program is configured to perform the method provided in the foregoing embodiments.

Embodiments of this application further provide a computer program product including instructions. When the computer program product is run on a computer, the computer is enabled to perform the method provided in the foregoing embodiments.

A person of ordinary skill in the art can understand that all or some of the operations in the foregoing method embodiments may be implemented by a program instructing relevant hardware. The program may be stored in a computer-readable storage medium. When the program is executed, operations including the foregoing method embodiments are performed. The storage medium may be at least one of the following media: a read-only memory (ROM), a RAM, a magnetic disk, an optical disc, or any medium that can store program code.

The embodiments of this specification are all described in a progressive manner. For same or similar parts in the embodiments, refer to these embodiments. Descriptions of each embodiment focus on a difference from other embodiments. In particular, device and system embodiments are basically similar to the method embodiments, and therefore are described briefly. For related parts, refer to partial descriptions in the method embodiments. The described device and system embodiments are merely exemplary. The units described as separate parts may or may not be physically separated, and parts shown as units may or may not be physical units, may be located in one position, or may be distributed on a plurality of network units. Some or all of the modules may be selected according to actual needs to achieve the objectives of the solutions of the embodiments. A person of ordinary skill in the art can understand and implement the embodiments without creative efforts.

The foregoing descriptions are merely specific implementations of this application, but are not intended to limit the protection scope of this application. Any variation or replacement readily figured out by a person skilled in the art within the technical scope disclosed in this application shall fall within the protection scope of this application. In addition, the implementations provided in the foregoing aspects of this application may be further combined to provide more implementations. Therefore, the protection scope of this application shall be subject to the protection scope of the claims.

**Claims**

1. A data encryption method, the method being executable by a terminal device, and the method comprising:

   transmitting a message request packet to a server, a first source address of the message request packet comprising an encrypted terminal address obtained by encrypting a terminal address of the terminal device by using a public key of the server; and
   receiving a traffic packet returned by the server for the message request packet, a second source address of the traffic packet comprising an encrypted server address obtained by encrypting a server address of the server by using a public key of the terminal device, for obtaining traffic data from the traffic packet.

2. The method according to claim 1, wherein the first source address of the message request packet further comprises a hidden terminal address comprising a virtual terminal address different from the terminal address; and the second source address of the traffic packet further comprises a hidden server address comprising a virtual server address different from the server address.

3. The method according to claim 1 or 2, wherein the method further comprises:

   receiving, through a traffic link to the server, a key creation packet returned by the server for the message request packet, a third source address of the key creation packet comprising the encrypted server address, and the key creation packet comprising encrypted key data obtained through encryption by using the public key of the terminal device;
   decrypting the encrypted key data by using the private key of the terminal device to obtain a shared key between the terminal device and the server and N intermediate shared keys, the N intermediate shared keys being in a one-to-one correspondence with N intermediate routing nodes in the traffic link, and N being an integer greater than or equal to 1;
   encrypting the N intermediate shared keys by using the shared key to obtain encrypted intermediate key data; and
   transmitting, to the server, a key acknowledgement packet comprising the encrypted intermediate key data, a fourth source address of the key acknowledgement packet comprising the encrypted terminal address.

4. The method according to any one of claims 1 to 3, wherein the receiving a traffic packet returned by the server for the message request packet comprises:
   receiving, through the traffic link, the traffic packet returned by the server for the message request packet, a destination address of the traffic packet being obtained by encrypting the terminal address by using a target intermediate shared key, and the target intermediate shared key being an intermediate shared key corresponding to a previous-hop intermediate routing node of the terminal device in the traffic link.

5. The method according to any one of claims 1 to 4, wherein the method further comprises:

   determining a packet receiving result for the traffic packet; and
   transmitting a traffic acknowledgement packet comprising the packet receiving result to the server, a fifth source address of the traffic acknowledgement packet comprising the encrypted terminal address.

6. The method according to any one of claims 1 to 5, wherein the method further comprises:
   receiving a traffic retransmission packet returned by the server in response to the traffic acknowledgement packet, the traffic retransmission packet being a traffic packet that is identified by the packet receiving result and that is not received by the terminal device, and a sixth source address of the traffic retransmission packet comprising the encrypted server address.

7. A data encryption method, the method being executable by a server, and the method comprising:

decrypting, by using a private key of the server, an encrypted terminal address in a message request packet received from a terminal device, to obtain a terminal address of the terminal device, the encrypted terminal address being obtained by encrypting the terminal address of the terminal device by using a public key of the server; and

transmitting, to the terminal device based on the terminal address, a traffic packet returned for the message request packet, a second source address of the traffic packet comprising an encrypted server address, and the encrypted server address being obtained by encrypting a server address of the server by using a public key of the terminal device.

8. The method according to claim 7, wherein the transmitting, to the terminal device based on the terminal address, a traffic packet returned for the message request packet comprises:

determining a traffic link from the server to the terminal device based on the terminal address, the traffic link comprising N intermediate routing nodes, and N being an integer greater than or equal to 1; and

transmitting the traffic packet to the terminal device through the N intermediate routing nodes in the traffic link.

9. The method according to claim 7 or 8, wherein the method further comprises:

generating a flow identifier and a shared key for the traffic link based on the terminal address and the server address;

encrypting the shared key by using the public key of the terminal device to obtain encrypted key data; and

transmitting, to the terminal device through the traffic link, a key creation packet comprising the encrypted key data and the flow identifier, a third source address of the key creation packet comprising the encrypted server address, and the key creation packet being configured for indicating the N intermediate routing nodes to generate an intermediate shared key based on the flow identifier, encrypt the intermediate shared key by using the public key of the terminal device, and add an encryption result to the encrypted key data.

10. The method according to any one of claims 7 to 9, wherein the method further comprises:

receiving a key acknowledgement packet returned by the terminal device in response to the key creation packet, a fourth source address of the key acknowledgement packet comprising the encrypted terminal address, the key acknowledgement packet comprising encrypted intermediate key data, the encrypted intermediate key data being obtained by encrypting N intermediate shared keys by using the shared key, and the N intermediate shared keys being in a one-to-one correspondence with the N intermediate routing nodes;

decrypting the encrypted intermediate key data by using the shared key to obtain the N intermediate shared keys;

obtaining, based on the N intermediate shared keys and routing addresses of the N intermediate routing nodes, encrypted routing information respectively corresponding to the N intermediate routing nodes, encrypted routing information corresponding to an $i^{th}$ intermediate routing node among the N intermediate routing nodes being obtained by encrypting routing information of the $i^{th}$ intermediate routing node and routing information of a next-hop node of the $i^{th}$ intermediate routing node by using an intermediate shared key corresponding to the $i^{th}$ intermediate routing node; and

adding the encrypted routing information to the traffic packet, a destination address of the traffic packet being obtained by encrypting the terminal address by using a target intermediate shared key, and the target intermediate shared key being an intermediate shared key of a previous-hop intermediate routing node of the terminal device in the traffic link.

11. The method according to any one of claims 7 to 10, wherein before the decrypting the encrypted intermediate key data by using the shared key to obtain the N intermediate shared keys, the method further comprises:

decrypting the encrypted terminal address by using the private key of the server to obtain the terminal address; generating the flow identifier for the traffic link based on the terminal address and the server address; and generating the shared key by using the terminal address and the flow identifier.

12. The method according to any one of claims 7 to 11, wherein the traffic packet further comprises a flow identifier, and the flow identifier is configured for indicating the intermediate routing node to generate a corresponding intermediate shared key based on the flow identifier, and decrypt the encrypted routing information by using the intermediate shared key to obtain the routing information of the next-hop node.

13. The method according to any one of claims 7 to 12, wherein the method further comprises:

receiving a traffic acknowledgement packet that is transmitted by the terminal device and that comprises a packet receiving result, a fifth source address of the traffic acknowledgement packet comprising the encrypted terminal address, and the packet receiving result being configured for identifying a receiving status of the terminal device for the traffic packet; and
transmitting a target traffic packet as a traffic retransmission packet to the terminal device when it is determined, based on the packet receiving result, that the terminal device has not received the target traffic packet, a sixth source address of the traffic retransmission packet comprising the encrypted server address.

14. A data encryption apparatus, the apparatus comprising a transmitting unit, and an obtaining unit,

the transmitting unit being configured to transmit a message request packet to a server, a first source address of the message request packet comprising an encrypted terminal address obtained by encrypting a terminal address of the terminal device by using a public key of the server;
the obtaining unit being configured to receive a traffic packet returned by the server for the message request packet, a second source address of the traffic packet comprising an encrypted server address obtained by encrypting a server address of the server by using a public key of the terminal device, for obtaining traffic data from the traffic packet.

15. A data encryption apparatus, the apparatus comprising a decryption unit, and a transmitting unit,

the decryption unit being configured to decrypt, by using a private key of the server, an encrypted terminal address in a message request packet received from a terminal device, to obtain a terminal address of the terminal device, the encrypted terminal address being obtained by encrypting the terminal address of the terminal device by using a public key of the server; and
the transmitting unit being configured to transmit, to the terminal device based on the terminal address, a traffic packet returned for the message request packet, a second source address of the traffic packet comprising an encrypted server address, and the encrypted server address being obtained by encrypting a server address of the server by using a public key of the terminal device.

16. A data encryption system, the system comprising a terminal device and a server, the terminal device being configured to perform the method according to any one of claims 1 to 6, and the server being configured to perform the method according to any one of claims 7 to 13.

17. A computer device, the computer device comprising a processor and a memory,

the memory being configured to store a computer program and transmit the computer program to the processor; and
the processor being configured to perform the method according to any one of claims 1 to 6 or perform the method according to any one of claims 7 to 13 based on instructions in the computer program.

18. A computer-readable storage medium, the computer-readable storage medium being configured to store a computer program, and the computer program being configured to perform the method according to any one of claims 1 to 6 or perform the method according to any one of claims 7 to 13.

19. A computer program product comprising a computer program, when the computer program product is run on a computer device, the computer device being enabled to perform the method according to any one of claims 1 to 6 or perform the method according to any one of claims 7 to 13.

**FIG. 1**

**FIG. 2**

**Attacker**

**Traffic packet**
**(Source address and**
**destination address)**

**Internet**

**Server**

**Message request**
**packet**
**(Source address and**
**destination address)**

FIG. 3

| Terminal device | | Server |
|---|---|---|

Transmit a message request packet to a server, a source address of the message request packet including an encrypted terminal address, and the encrypted terminal address being obtained by encrypting a terminal address of the terminal device by using a public key of the server — S401

Decrypt the encrypted terminal address by using a private key of the server to obtain the terminal address — S402

Receive a traffic packet returned for the message request packet, a source address of the traffic packet including an encrypted server address, and the encrypted server address being obtained by encrypting a server address of the server by using a public key of the terminal device — S403

Decrypt the encrypted server address by using a private key of the terminal device to obtain a to-be-determined server address — S404

Obtain traffic data from the traffic packet in response to the to-be-determined server address being consistent with the server address — S405

FIG. 4

Terminal device    Message request
packet
Pkt_req={IP_j, IP_sec}

Internet

Server

FIG. 5

Terminal device

Internet

Traffic packet
Pkt_traffic={IP_n, IP_sec_server}

Server

FIG. 6

Terminal device

Traffic
acknowledgement
packet
Pkt_ack={IP_j, IP_sec,
Pkt_num_range}

Internet

Server

FIG. 7

Terminal device

Internet

Key creation packet
Pkt_key={IP_n, FlowID,
IP_sec_server, Enc_share}

Server

FIG. 8

R1       R2       R3

Terminal device

Pkt_key

Server

Pkt_key+=Enc_share_i

FIG. 9

Terminal device

Key
acknowledgement
packet
Pkt_key_ack={IP_j,
IP_sec,
Enc_share_server_i}

Internet

Server

FIG. 10

R1       R2       R3

Terminal device

Server

Traffic packet
Pkt_traffic={IP_n, IP_j, IP_sec_server, FlowID,
Enc_routing_i}

FIG. 11

A terminal device transmits a message request packet carrying a hidden terminal address and an encrypted terminal address — S1201

A server transmits a key creation packet — S1202

An intermediate routing node calculates an intermediate shared key, encrypts the intermediate shared key, and embeds an encrypted intermediate shared key into the key creation packet — S1203

The terminal device obtains an intermediate shared key through decryption, encrypts the intermediate shared key, and returns an encrypted intermediate shared key to the server by using a key acknowledgement packet — S1204

The server obtains an intermediate shared key through decryption, and encrypts routing information of a traffic link by using the intermediate shared key — S1205

The intermediate routing node calculates an intermediate shared key and verifies encrypted routing information in a traffic packet — S1206

Does verification succeed? — S1207

Forward the packet to a next hop — S1208a

Discard the packet — S1208b

The terminal device transmits a traffic acknowledgement packet to the server, to implement retransmission upon packet loss — S1209

FIG. 12

Server

①: Message request packet (encrypted source address)
②: Key creation packet (encrypted source address)
③: Key acknowledgement packet (encrypted source address)
④: Traffic packet (encrypted source and destination addresses)
⑤: Traffic acknowledgement packet (encrypted source address)

① ②
③
④
⑤

Terminal device A   Terminal device B   Terminal device C   Terminal device D

## FIG. 13

Data encryption apparatus 1400

1401            1402            1403

Transmitting unit   ——   Obtaining unit   ——   Decryption unit

1404

Receiving unit

## FIG. 14

Data encryption apparatus 1500

Obtaining unit 1501 — Decryption unit 1502 — Transmitting unit 1503

FIG. 15

Data encryption system 1600

Terminal device 1601 — Server 1602

FIG. 16

RF circuit 1410

Wi-Fi module 1470

Power supply 1490

1480 Processor

Audio circuit 1460 — Speaker 1461 — Microphone 1462

Memory 1420

Sensor 1450

Input unit 1430 — Touch panel 1431 — Other input devices 1432

Display unit 1440 — Display panel 1441

FIG. 17

1500

Server

1522 — Central processing unit

Power supply — 1526

Wired or wireless network interface — 1550

Operating system — 1541

Data — 1544

Application — 1542

Storage medium — 1530

Input/Output interface — 1558

Memory — 1532

FIG. 18

## INTERNATIONAL SEARCH REPORT

| International application No. |
|---|
| **PCT/CN2023/131400** |

### A. CLASSIFICATION OF SUBJECT MATTER

H04L 9/40(2022.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, DWPI, VCN, CNKI: 加密, 报文, 地址, 源, 目的, 隐藏, 隐匿, 伪装, 公钥, 私钥, 共享, 中间, 路由, encryption, packet, address, source, destination, hide, public key, private key, shared, intermediate, route

### C. DOCUMENTS CONSIDERED TO BE RELEVANT

| Category* | Citation of document, with indication, where appropriate, of the relevant passages | Relevant to claim No. |
|---|---|---|
| X | CN 110493367 A (TSINGHUA UNIVERSITY) 22 November 2019 (2019-11-22)<br>description, paragraphs 30-55 | 1-2, 5-8, 13-19 |
| X | CN 114915583 A (ZTE CORP.) 16 August 2022 (2022-08-16)<br>description, paragraphs 50-69 | 1-2, 5-8, 13-19 |
| A | CN 105978798 A (ZICT TECHNOLOGY CO., LTD.) 28 September 2016 (2016-09-28)<br>entire document | 1-19 |
| A | CN 109462594 A (VISIONVERA INFORMATION TECHNOLOGY CO., LTD.) 12 March 2019 (2019-03-12)<br>entire document | 1-19 |
| A | US 2011264908 A1 (CHENGDU HUAWEI SYMANTEC TECHNOLOGIES CO., LTD.) 27 October 2011 (2011-10-27)<br>entire document | 1-19 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **19 January 2024** | **24 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/131400**

| Patent document cited in search report | | | Publication date (day/month/year) | Patent family member(s) | | | Publication date (day/month/year) |
|---|---|---|---|---|---|---|---|
| CN | 110493367 | A | 22 November 2019 | None | | | |
| CN | 114915583 | A | 16 August 2022 | WO | 2022166979 | A1 | 11 August 2022 |
| CN | 105978798 | A | 28 September 2016 | None | | | |
| CN | 109462594 | A | 12 March 2019 | None | | | |
| US | 2011264908 | A1 | 27 October 2011 | US | 8499146 | B2 | 30 July 2013 |
| | | | | EP | 2346205 | A1 | 20 July 2011 |
| | | | | EP | 2346205 | A4 | 21 March 2012 |
| | | | | EP | 2346205 | B1 | 12 June 2013 |
| | | | | WO | 2010048865 | A1 | 06 May 2010 |
| | | | | CN | 101404579 | A | 08 April 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023102019073